(19) Europäisches Patentamt / European Patent Office / Office européen des brevets

(11) **EP 4 714 648 A1**

(12) **EUROPEAN PATENT APPLICATION**
published in accordance with Art. 153(4) EPC

(43) Date of publication:
**25.03.2026 Bulletin 2026/13**

(21) Application number: **24843523.2**

(22) Date of filing: **18.07.2024**

(51) International Patent Classification (IPC):
*B32B 5/14* $^{(2006.01)}$     *B32B 7/12* $^{(2006.01)}$
*B32B 7/022* $^{(2019.01)}$     *B32B 7/04* $^{(2019.01)}$
*B32B 17/10* $^{(2006.01)}$     *B32B 27/06* $^{(2006.01)}$
*C09J 9/00* $^{(2006.01)}$     *G06F 1/16* $^{(2006.01)}$

(52) Cooperative Patent Classification (CPC):
**B32B 5/14; B32B 7/022; B32B 7/04; B32B 7/12;
B32B 17/10; B32B 27/06; C09J 9/00; G06F 1/16**

(86) International application number:
**PCT/KR2024/010359**

(87) International publication number:
**WO 2025/018809 (23.01.2025 Gazette 2025/04)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 20.07.2023  KR 20230094648
12.10.2023  KR 20230136142

(71) Applicant: Samsung Electronics Co., Ltd.
Suwon-si, Gyeonggi-do 16677 (KR)

(72) Inventors:
• LIM, Kiyul
  Suwon-si Gyeonggi-do 16677 (KR)
• KIM, Ingi
  Suwon-si Gyeonggi-do 16677 (KR)
• PARK, Jinhyun
  Suwon-si Gyeonggi-do 16677 (KR)
• CHO, Hyunmoon
  Suwon-si Gyeonggi-do 16677 (KR)
• LEE, Hojung
  Suwon-si Gyeonggi-do 16677 (KR)

(74) Representative: Gulde & Partner
Patent- und Rechtsanwaltskanzlei mbB
Berliner Freiheit 2
10785 Berlin (DE)

(54) **ELECTRONIC DEVICE COMPRISING FLEXIBLE DISPLAY**

(57)    The present disclosure relates to an adhesive layer having different rigidities in correspondence to a deformed area and a non-deformed area of a flexible display included in an electronic device. To this end, the electronic device may comprise a flexible display, which uses an adhesive layer so as to have a multilayer structure. The adhesive layer can include a low modulus area corresponding to a variable area of the flexible display and a high modulus area corresponding to a non-variable area of the flexible display. Other various embodiments are possible.

*FIG.4*

EP 4 714 648 A1

**Description**

**[Technical Field]**

Various embodiments of the disclosure relate to a flexible display having an adhesive layer composed of heterogeneous adhesives and an electronic device including the same.

**[Background Art]**

An electronic device requires a small profile for portability and requires a large-area display for providing users with substantial information. To achieve compatibility between a small profile and a large-area display in an electronic device, various form factors such as rollable, slidable, or foldable are emerging, departing from the rectangular bar-shaped form factor. An electronic device having such a form factor requires a flexible display capable of shape deformation through bending or folding.

As the number or frequency of deformation of a flexible display increases, stress exceeding the elastic limit of a protective layer (e.g., yield strength) may be applied, resulting in plastic deformation. In this case, the flexible display may experience distortion or decreased transparency due to creases or scratches. A flexible display may have reduced lifespan due to repeated deformation, and elements and lines may be damaged.

A display of an electronic device may be implemented by stacking at least a plurality of layers, which may be referred to as a "display stacked structure." At least a plurality of members constituting the display stacked structure may be fixed by adhesive. The adhesive may be implemented as a single layer having a predetermined thickness, and such a layer may be referred to as an "adhesive layer."

Due to the uniformity of the adhesive material forming the adhesive layer corresponding to areas with high deformation frequency and areas with low deformation frequency in a flexible display, there may be limitations in effectively responding to the deformation characteristics of the flexible display.

**[Disclosure of Invention]**

**[Technical Problem]**

In various embodiments of the disclosure, an adhesive layer having different stiffnesses corresponding to a deformable area and a non-deformable area in a flexible display included in an electronic device may be provided.

**[Technical Solution]**

An electronic device according to an embodiment of the disclosure may include a flexible display having a multilayer structure using an adhesive layer. The adhesive layer may include a low modulus area corresponding to a variable area of the flexible display and a high modulus area corresponding to a non-variable area of the flexible display. A width of the low modulus area may be greater than or equal to a first portion of a circumference formed by a radius of curvature of the variable area.

An electronic device according to an embodiment of the disclosure may include a flexible display having a multilayer structure using an adhesive layer. The flexible display may include a variable area sliding by a roller and a non-variable area adjacent to the variable area. The adhesive layer may include a low modulus area corresponding to the variable area and a high modulus area corresponding to the non-variable area. The high modulus area may be adjacent to one side of the low modulus area. A width of the low modulus area may be greater than or equal to 1/2 of a circumference formed by a radius of curvature of the variable area.

An electronic device according to an embodiment of the disclosure may include a flexible display having a multilayer structure using an adhesive layer. The flexible display may include a variable area folded by a hinge structure and non-variable areas adjacent to two opposite sides of the variable area. The adhesive layer may include a low modulus area corresponding to the variable area and a high modulus area corresponding to the non-variable area. The high modulus areas may be adjacent to two opposite sides of the low modulus area, and a width of the low modulus area may be greater than or equal to 1/2 of a circumference formed by a radius of curvature of the variable area.

**[Advantageous Effects of Invention]**

An electronic device according to an embodiment of the disclosure may provide a flexible display having predetermined flexibility corresponding to a deformable area while having predetermined durability corresponding to a non-deformable area.

An electronic device according to an embodiment of the disclosure may provide an adhesive layer providing a predetermined level of refractive index and transmittance.

[Brief Description of Drawings]

FIG. 1 is a view illustrating an electronic device in a network environment according to various embodiments.

FIG. 2A is a view illustrating a state in which a portion of a flexible display of an electronic device is housed in a second structure according to an embodiment of the disclosure.

FIG. 2B is a view illustrating a state in which most of a flexible display of an electronic device is exposed to the outside of a second structure according to an embodiment of the disclosure.

FIG. 2C is an exploded perspective view illustrating an electronic device according to an embodiment of the disclosure.

FIG. 3A is a cross-sectional view illustrating a display according to an embodiment of the disclosure.

FIG. 3B is a cross-sectional view illustrating a display according to an embodiment of the disclosure.

FIG. 4 is a cross-sectional view illustrating a display according to an embodiment of the disclosure.

FIG. 5 is a flowchart for manufacturing an adhesive layer according to an embodiment of the disclosure.

FIG. 6 is a view illustrating a process of manufacturing an adhesive layer from a manufacturing device according to an embodiment of the disclosure.

FIG. 7 is a view illustrating a process of manufacturing an adhesive layer from a manufacturing device according to an embodiment of the disclosure.

FIG. 8 is a cross-sectional view illustrating a unit adhesive layer constituting an adhesive layer according to an embodiment of the disclosure.

FIG. 9 is a cross-sectional view illustrating a display according to an embodiment of the disclosure.

FIG. 10 is a cross-sectional view illustrating a display according to an embodiment of the disclosure.

FIG. 11 is a cross-sectional view illustrating a display according to an embodiment of the disclosure.

FIG. 12 is a cross-sectional view illustrating a display according to an embodiment of the disclosure.

FIG. 13 is a view illustrating an unfolded state of an electronic device according to an embodiment of the disclosure.

FIG. 14 is an exploded perspective view illustrating an electronic device according to an embodiment of the disclosure;

FIG. 15 is a view illustrating an unfolded state of an electronic device according to an embodiment of the disclosure.

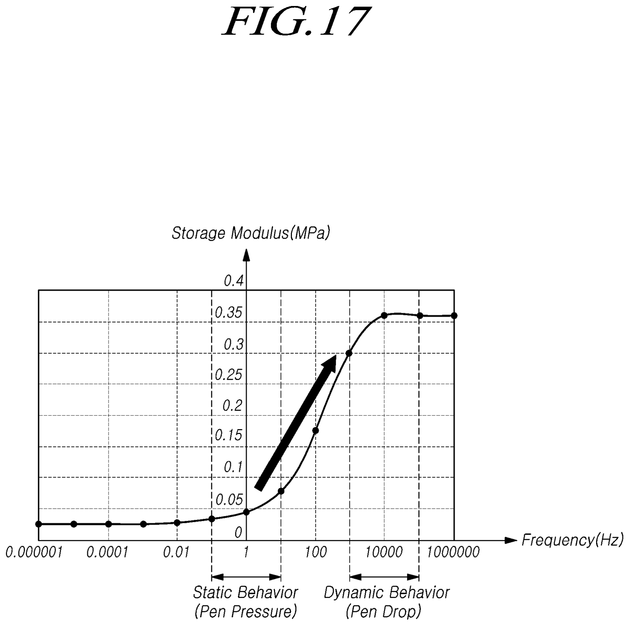

FIG. 16 is an exploded perspective view illustrating an electronic device according to an embodiment of the disclosure. FIG. 17 is a graph illustrating storage modulus according to frequency of external impact for testing impact resistance of an adhesive layer according to an embodiment of the disclosure.

In relation to the description of the drawings, the same or similar reference numerals may be used for the same or similar components.

**[Mode for the Invention]**

Hereinafter, embodiments of the disclosure are described in detail with reference to the drawings so that those skilled in the art to which the disclosure pertains may easily practice the disclosure. However, the disclosure may be implemented in other various forms and is not limited to the embodiments set forth herein. The same or similar reference denotations may be used to refer to the same or similar elements throughout the specification and the drawings. Further, for clarity and brevity, no description is made of well-known functions and configurations in the drawings and relevant descriptions.

Hereinafter, an electronic device to be described may include a flexible display that is at least one of a foldable display, a rollable display, a slidable display, or a stretchable display. The flexible display may deform due to folding or bending. The folding or bending of the flexible display may be referred to as "deformation," which may mean all deformations occurring at specific points according to characteristics of the flexible display.

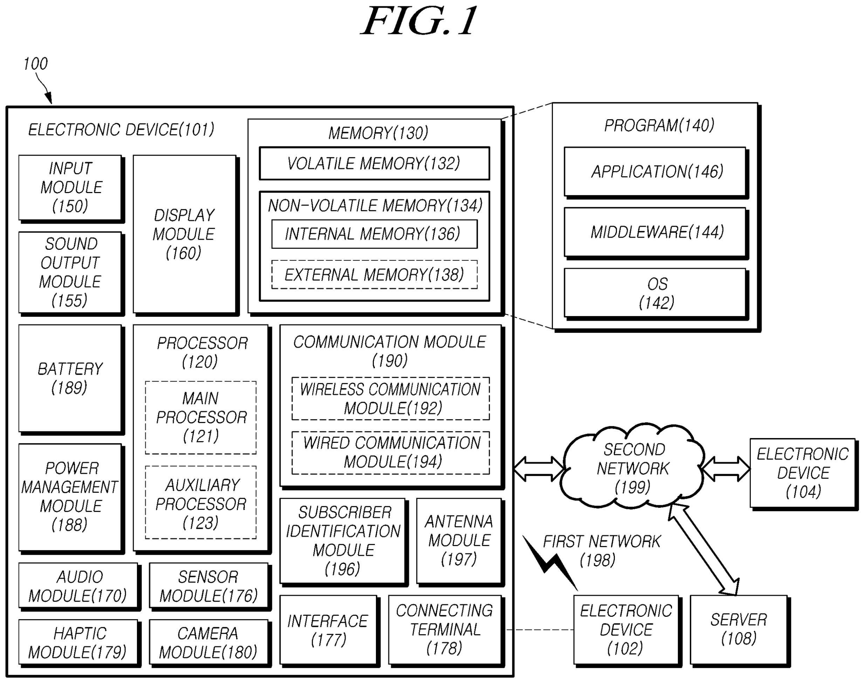

FIG. 1 is a block diagram illustrating an electronic device 101 in a network environment 100, according to various embodiments.

Referring to FIG. 1, the electronic device 101 in the network environment 100 may communicate with at least one of an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., the program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, in case that the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operation state (e.g., power or temperature) of the electronic device 101 or an external environmental state (e.g., the user's state), and then generate an electrical signal or data value corresponding to the detected state. According to an embodiment, the sensor module 176 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wiredly) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as Bluetooth™, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

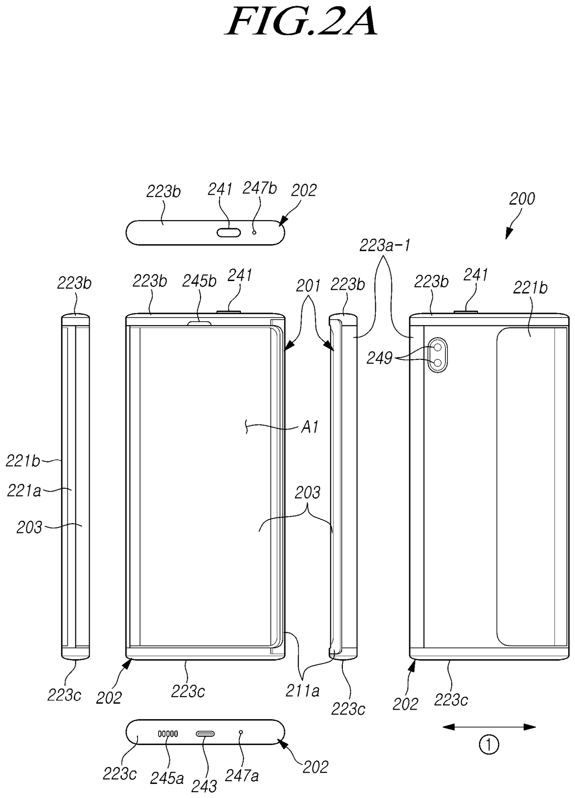

FIG. 2A is a view illustrating a state in which a portion of a flexible display 203 of an electronic device 200 (e.g., the electronic device 101 of FIG. 1) is received in a second structure 202, according to an embodiment.

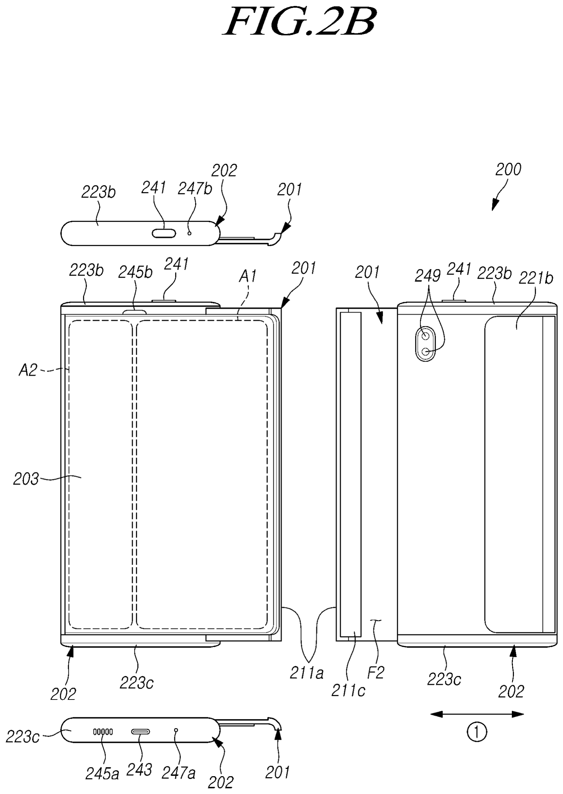

FIG. 2B is a view illustrating a state in which most of a flexible display 203 of an electronic device 200 is exposed to the outside of a second structure 202, according to an embodiment.

Referring to FIGS. 2A and 2B, an electronic device 200 may include a first structure 201 and a second structure 202 disposed to be movable in the first structure 201. According to an embodiment, the electronic device 200 may be interpreted as having a structure in which the first structure 201 is slidably disposed on the second structure 202. According to an embodiment, the first structure 201 may be disposed to perform reciprocating motion by a predetermined distance in a predetermined direction with respect to the second structure 202, for example, a direction indicated by an arrow ①.

According to an embodiment, the first structure 201 may be referred to as, for example, a first housing, a slide unit, or a slide housing, and may be disposed to reciprocate on the second structure 202. According to an embodiment, the second structure 202 may be referred to as, for example, a second housing, a main part, or a main housing, and may receive various electric or electronic components such as a main circuit board or a battery. A portion (e.g., the first area A1) of the display 203 (e.g., a flexible display) may be seated on the first structure 201. According to an embodiment, another portion (e.g., the second area A2) of the display 203 may be received (e.g., slide-in) into the inside of the second structure 202 or exposed (e.g., slide-out) to the outside of the second structure 202 as the first structure 201 moves (e.g., slides) relative to the second structure 202.

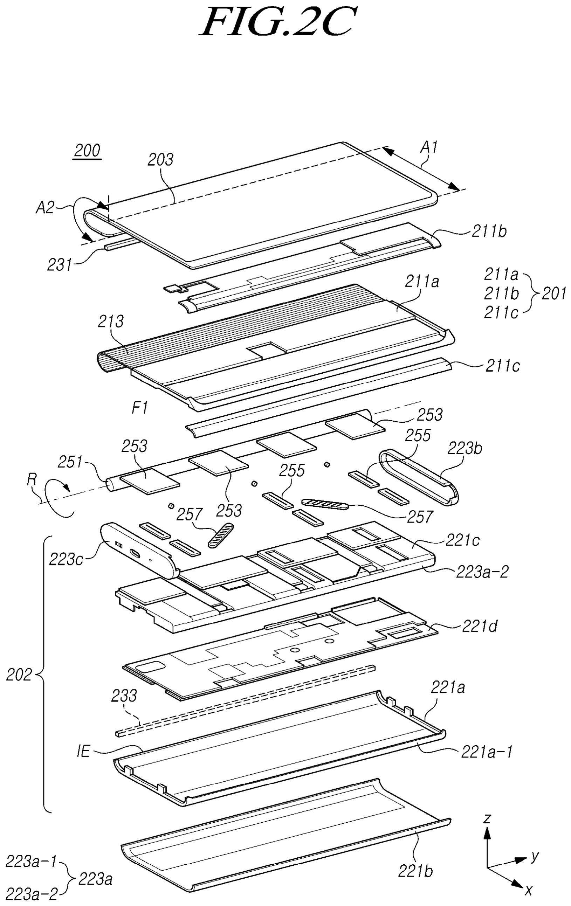

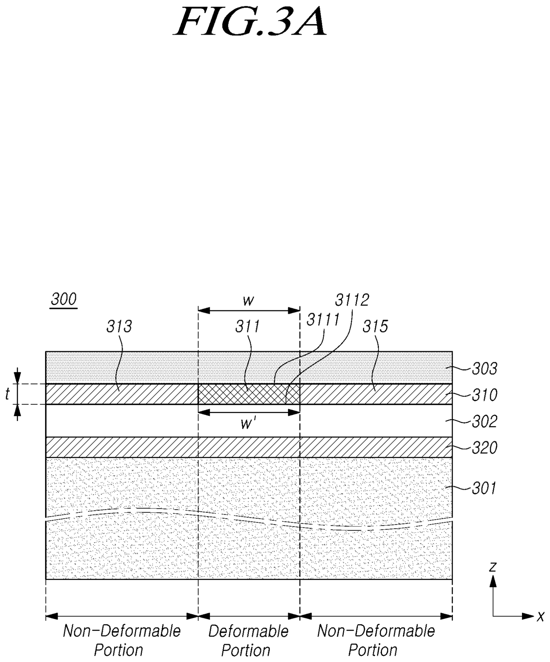

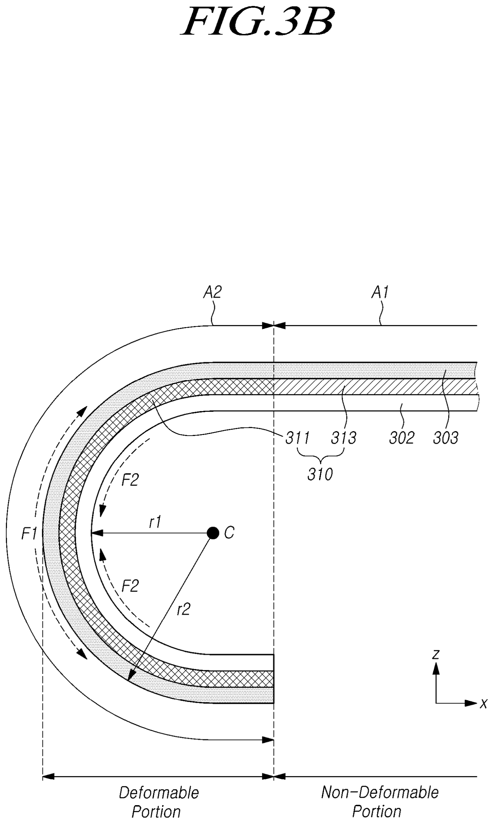

According to various embodiments, the first structure 201 may include a first plate 211a (e.g., a slide plate), and the first structure 201 may include a first surface F1 (refer to FIG. 3) formed to at least a portion of the first plate 211a and a second surface F2 facing away from the first surface F1. According to an embodiment, the second structure 202 may include a second plate 221a (refer to FIG. 2C) (e.g., a rear case), a first sidewall 223a extending from the second plate 221a, a second sidewall 223b extending from the first sidewall 223a and the second plate 221a, a third sidewall 223c extending from the first sidewall 223a and the second plate 221a and parallel to the second sidewall 223b, and/or a rear plate 221b (e.g., a rear window). According to an embodiment, the second sidewall 223b and the third sidewall 223c may be formed to be perpendicular to the first sidewall 223a. According to an embodiment, the second plate 221a, the first sidewall 223a, the second sidewall 223b, and the third sidewall 223c may be formed to have an opening (e.g., in the front face) to receive (or surround) at least a portion of the first structure 201. For example, the first structure 201 may be coupled to the second structure 202 in a state in which it is at least partially surrounded, and the first structure 201 may slide in a direction parallel to the first surface F1 or the second surface F2, for example, direction ① indicated with the arrow.

According to various embodiments, the second sidewall 223b or the third sidewall 223c may be omitted. According to an embodiment, the second plate 221a, the first sidewall 223a, the second sidewall 223b, and/or the third sidewall 223c may be formed as separate structures and may be combined or assembled. The rear plate 221b may be coupled to surround at least a portion of the second plate 221a. According to an embodiment, the rear plate 221b may be formed substantially integrally with the second plate 221a. According to an embodiment, the second plate 221a or the rear plate 221b may cover at least a portion of the display 203. For example, the display 203 may be at least partially received inside the second structure 202, and the second plate 221a or the rear plate 221b may cover a portion of the display received inside the second structure 202.

According to an embodiment, the first structure 201 may be moved in an open state or closed state with respect to the second structure 202 in a first direction (e.g., direction ①) parallel with the second plate 221a (e.g., the rear case) and the second sidewall 223b to be positioned a first distance away from the first sidewall 223a in the closed state and be positioned a second distance away from the first sidewall 223a in the open state, wherein the second distance is larger than the first distance. According to an embodiment, in the closed state, the first structure 201 may be positioned to surround a portion of the first sidewall 223a.

According to various embodiments, the electronic device 200 may include a display 203, a key input device 241, a connector hole 243, audio modules 245a, 245b, 247a, and 247b, or a camera module 249. Although not shown, the electronic device 200 may further include an indicator (e.g., a light emitting diode (LED) device) or various sensor modules.

According to an embodiment, the display 203 may include the first area A1 and the second area A2. According to an embodiment, the first area A1 may extend substantially across at least a portion of the first surface F1 and may be disposed on the first surface F1. The second area A2 may extend from the first area A1 and be inserted or received into the inside of the second structure 202 (e.g., housing) or be exposed to the outside of the structure 202 as the first structure 201 slides. As will be described below, the second area A2 may be moved while being substantially guided by a roller 251 (refer to FIG. 2C) mounted on the second structure 202 and may thus be slid into the inside of or exposed to the outside of the second structure 202. For example, while the first structure 201 slides, a portion of the second area A2 may be deformed into a curved shape in a position corresponding to the roller 251.

According to various embodiments, in case of being viewed from the top of the first plate 211a (e.g., slide plate), in case that the first structure 201 moves from the closed state to the opened state, the second area A2 may be gradually exposed to the outside of the second structure 202 to be substantially coplanar with the first area A1. The display 203 may be disposed to be coupled with, or adjacent, a touch detecting circuit, a pressure sensor capable of measuring the strength (pressure) of touches, and/or a digitizer for detecting a magnetic field-type stylus pen. According to an embodiment, the second area A2 may be at least partially received inside the second structure 202, and a portion of the second area A2 may be exposed to the outside even in the state shown in FIG. 2A (e.g., the closed state). According to an embodiment, irrespective of the closed state or the opened state, the exposed portion of the second area A2 may be positioned on the roller 251 and, in a position corresponding to the roller 251, a portion of the second area A2 may maintain the curved shape.

The key input device 241 may be disposed on the second sidewall 223b or the third sidewall 223c of the second structure 202. Depending on the appearance and the state of use, the electronic device 200 may be designed to omit the illustrated key input device 241 or to include additional key input device(s). According to an embodiment, the electronic device 200 may include a key input device (not shown), e.g., a home key button or a touchpad disposed around the home key button. According to an embodiment, at least a portion of the key input device 241 may be positioned on an area of the first structure 201.

According to various embodiments, the connector hole 243 may be omitted or may receive a connector (e.g., a universal serial bus (USB) connector) for transmitting and receiving power and/or data with an external electronic device. Although not shown, the electronic device 200 may include a plurality of connector holes 243, and some of the plurality of connector holes 243 may function as connector holes for transmitting/receiving audio signals with an external electronic device. In the illustrated embodiment, the connector hole 243 is disposed on the third sidewall 223c, but the disclosure is not limited thereto. For example, the connector hole 243 or a connector hole not shown may be disposed on the first sidewall 223a or the second sidewall 223b.

According to various embodiments, the audio modules 245a, 245b, 247a, and 247b may include speaker holes 245a and 245b or microphone holes 247a and 247b. One of the speaker holes 245a and 245b may be provided as a receiver hole for voice calls, and the other may be provided as an external speaker hole. The microphone holes 247a and 247b may have a microphone inside to obtain external sounds. According to an embodiment, there may be a plurality of microphones to be able to detect the direction of a sound. According to an embodiment, the speaker holes 245a and 245b and the microphone holes 247a and 247b may be implemented as one hole, or a speaker may be included without the speaker holes 245a and 245b (e.g., a piezo speaker). According to an embodiment, the speaker hole indicated by reference number may be disposed in the first structure 201 to be used as a receiver hole for voice call, the speaker hole (e.g., external speaker hole) indicated by reference number or the microphone holes 247a and 247b may be disposed in the second structure 202 (e.g., one of the side surfaces 223a, 223b, and 223c).

The camera module 249 may be provided on the second structure 202 and may capture a subject in a direction opposite to the first area A1 of the display 203. The electronic device 200 may include a plurality of camera modules 249. For example, the electronic device 200 may include a wide-angle camera, a telephoto camera, or a close-up camera, and according to an embodiment, by including an infrared projector and/or an infrared receiver, the electronic device 200 may measure the distance to the subject. The camera module 249 may include one or more lenses, an image sensor, and/or an image signal processor. Although not shown, the electronic device 200 may further include a camera module (e.g., a front camera) that captures the subject in a direction opposite to the first area A1 of the display 203. For example, the front camera may be disposed around the first area A1 or in an area overlapping the display 203 and, in case of being disposed in the area overlapping the display 203, the front camera may capture the subject via the display 203.

According to various embodiments, an indicator (not shown) of the electronic device 200 may be disposed on the first structure 201 or the second structure 202, and the indicator may include a light emitting diode to provide state information about the electronic device 200 as a visual signal. The sensor module (not shown) of the electronic device 200 may produce an electrical signal or data value corresponding to the internal operation state or external environment state of the electronic device 200. The sensor module may include, for example, a proximity sensor, a fingerprint sensor, or a biometric sensor (e.g., an iris/face recognition sensor or a heartrate monitor (HRM) sensor). According to an embodiment, the sensor module may further include, e.g., at least one of a gesture sensor, a gyro sensor, an atmospheric pressure sensor, a magnetic sensor, an acceleration sensor, a grip sensor, a color sensor, an infrared (IR) sensor, a temperature sensor, a humidity sensor, or an illuminance sensor.

FIG. 2C is an exploded perspective view illustrating an electronic device according to an embodiment.

Referring to FIG. 2C, the electronic device 200 may include a first structure 201, a second structure 202 (e.g., a housing), a display 203 (e.g., a flexible display), a guide member (e.g., the roller 251), and/or a support sheet 253. A portion (e.g., the second area A2) of the display 203 may be received in the second structure 202 while being guided by the roller 251.

According to various embodiments, the first structure 201 may include a first plate 211a (e.g., a slide plate), a first bracket 211b and/or a second bracket 211c mounted on the first plate 211a. The first structure 201, for example, the first plate 211a, the first bracket 211b, and/or the second bracket 211c may be formed of a metallic material and/or a non-metallic (e.g., polymer) material. The first plate 211a may be mounted on the second structure 202 (e.g., the housing) and may be linearly reciprocated in one direction (e.g., in the direction ① indicated with the arrow in FIG. 2A) while being guided by the second structure 202. According to an embodiment, the first bracket 211b may be coupled with the first plate 211a to, together with the first plate 211a, form the first surface F1 of the first structure 201. The first area A1 of the display 203 may be substantially mounted on the first surface F1 and remain in a flat plate shape. The second bracket 211c may be coupled to the first plate 211a to, together with the first plate 211a, form the second surface F2 of the first structure 201. According to an embodiment, the first bracket 211b and/or the second bracket 211c may be integrally formed with the first plate 211a. This may be appropriately designed in consideration of the assembly structure or manufacturing process of the product to be manufactured. The first structure 201 or the first plate 211a may be coupled with the second structure 202 and slide with respect to the second structure 202.

According to various embodiments, the second structure 202 (e.g., the housing) may include a second plate 221a (e.g., the rear case), a printed circuit board (not shown), a rear plate 221b, a third plate 221c (e.g., the front case), and a supporting member 221d. The second plate 221a, e.g., the rear case, may be disposed to face in a direction opposite to the first surface F1 of the first plate 211a, and the second plate 221a may substantially form the external shape of the second structure 202 or the electronic device 200. According to an embodiment, the second structure 202 may include a first sidewall 223a extending from the second plate 221a, a second sidewall 223b extending from the second plate 221a and formed to be substantially perpendicular to the first sidewall 223a, and a third sidewall 223c extending from the second plate 221a, substantially perpendicular to the first sidewall 223a, and parallel to the second sidewall 223b. In the illustrated embodiment, the second sidewall 223b and the third sidewall 223c are manufactured as separate components from the second plate 221a and are mounted or assembled on the second plate 221a. However, the second sidewall 223b and the third sidewall 223c may alternatively be integrally formed with the second plate 221a. The space formed by the second structure 202 may receive an antenna for proximity wireless communication, an antenna for wireless charging, or an antenna for magnetic secure transmission (MST).

According to various embodiments, the rear plate 221b may be coupled to the outer surface of the second plate 221a and, according to an embodiment, the rear plate 221b may be manufactured integrally with the second plate 221a. According to an embodiment, the second plate 221a may be formed of a metal or polymer, and the rear plate 221b may be formed of a material such as metal, glass, synthetic resin, or ceramic to decorate the exterior of the electronic device 200. According to an embodiment, the second plate 221a and/or the rear plate 221b may be formed of a material that transmits light at least partially (e.g., an auxiliary display area). For example, while a portion (e.g., the second area A2) of the display 203 is accommodated in the second structure 202, the electronic device 200 may output visual information using a partial area of the display 203 received inside the second structure 202. The auxiliary display area may provide the visual information output from the area received inside the second structure 202 to the outside of the second structure 202.

According to various embodiments, the third plate 221c may be formed of a metal or polymer, and the third plate 221c may be coupled with the second plate 221a (e.g., rear case), the first sidewall 223a, the second sidewall 223b, and/or the third sidewall 223c to form an internal space of the second structure 202. According to an embodiment, the third plate 221c may be referred to as a "front case", and the first structure 201, e.g., the first plate 211a, may be slid while substantially facing the third plate 221c.

According to various embodiments, the articulated hinge structure 213 may include a plurality of bars or rods (not illustrated) and may be connected to one end of the first structure 201. For example, as the first structure 201 slides, the articulated hinge structure 213 may move with respect to the second structure 202 and, in a closed state (e.g., the state shown in FIG. 2A), the articulated hinge structure 213 may be substantially accommodated inside the second structure 202. According to an embodiment, even in the closed state, a portion of the articulated hinge structure 213 may not be received inside the second structure 202. For example, even in the closed state, a portion of the articulated hinge structure 213 may be positioned to correspond to the roller 251 outside the second structure 202. The plurality of rods 214 may extend in a straight line and be disposed parallel to the rotational axis R of the roller 251, and the plurality of rods 214 may be arranged along a direction perpendicular to the rotational axis R, e.g., the direction along which the first structure 201 slides.

According to various embodiments, each rod included in the articulated hinge structure 213 may orbit around other adjacent rods while remaining parallel to the other adjacent rods. Accordingly, as the first structure 201 slides, the plurality of rods may be arranged to form a curved shape or a planar shape. For example, as the first structure 201 slides, a portion of the articulated hinge structure 213, which faces the roller 251, may form a curved surface, and another portion of the articulated hinge structure 213, which does not face the roller 251, may form a flat surface. According to an embodiment, the second area A2 of the display 203 may be mounted or supported on the articulated hinge structure 213 and, in the open state (e.g., the state shown in FIG. 2B), the second area A2, along with the first area A1, may be exposed to the outside of the second structure 202. In the state in which the second area A2 is exposed to the outside of the second structure 202, the articulated hinge structure 213 may substantially form a flat surface, thereby supporting or maintaining the second area A2 in the flat state.

According to an embodiment, the first sidewall 223a may be formed of a combination of a first sidewall portion 223a-1 extending from the second plate 221a and a second sidewall portion 223a-2 formed at an edge of the third plate 221c. According to an embodiment, the first sidewall portion 223a-1 may be coupled to surround an edge of the third plate 221c, e.g., the second sidewall portion 223a-2. In this case, the first sidewall portion 223a-1 itself may form the first sidewall 223a.

According to various embodiments, the support member 221d may be disposed in a space between the second plate 221a and the third plate 221c, and may have a flat plate shape formed of a metal or polymer. The support member 221d may provide an electromagnetic shielding structure in the internal space of the second structure 202 or may increase mechanical rigidity of the second structure 202.

According to various embodiments, a printed circuit board (not shown) may be disposed in a space between the third plate 221c and the support member 221d. A processor, memory, and/or interface may be mounted on the printed circuit board. The processor may include one or more of, e.g., a central processing unit, an application processor, a graphic processing device, an image signal processing, a sensor hub processor, or a communication processor.

The memory may include, e.g., a volatile or non-volatile memory.

The interface may include, e.g., a high definition multimedia interface (HDMI), a universal serial bus (USB) interface, a secure digital (SD) card interface, and/or an audio interface. The interface may electrically or physically connect, e.g., the electronic device 200 with an external electronic device and may include a USB connector, an SD card/multimedia card (MMC) connector, or an audio connector.

According to various embodiments, the display 203 may be an organic light emitting diode-based flexible display, and the display 203 may normally remain in the flat shape and may be at least partially deformed into a curved shape. According to an embodiment, the first area A1 of the flexible display 203 may be mounted or attached to the first surface F1 of the first structure 201 and maintained in a substantially flat shape. The second area A2 may extend from the first area A1. For example, the second area A2 may extend along the sliding direction of the first structure 201 and may be deformed to be at least partially curved.

According to various embodiments, as the first structure 201 slides on the second structure 202, the area of the display 203 exposed to the outside may vary. The electronic device 200 (e.g., processor) may change the area of the display 203 that is activated based on the area of the display 203 that is exposed to the outside. For example, in the opened state or in an intermediate position between the closed state and the opened state, the electronic device 200 may activate a partial area exposed to the outside of the second structure 202 of the entire area of the display 203. In the closed state, the electronic device 200 may activate the first area A1 of the display 203 and deactivate the second area A2. In the closed state, in case that there is no user input for a certain period of time (e.g., 30 seconds or 2 minutes), the electronic device 200 may deactivate the entire area of the display 203. According to an embodiment, in the state in which the entire area of the display 203 is deactivated, the electronic device 200 may activate a partial area of the display 203 as necessary (e.g., a notification according to user settings, missing call/received message notification) and provide visual information through the auxiliary display area (e.g., a portion of the second plate 221a and/or the rear plate 221b formed of a material that transmits light).

According to various embodiments, in the opened state (e.g., the state shown in FIG. 2B), the entire area (e.g., the first area A1 and the second area A2) of the display 203 may be substantially exposed to the outside, and the first area A1 and the second area A2 may be arranged to form a plane. According to an embodiment, even in the opened state, a portion (e.g., one end) of the second area A2 may be positioned corresponding to the roller 251, and the portion of the second area A2, which corresponds to the roller 251 may remain in the curved shape. For example, according to various embodiments of the disclosure, despite the phrase "the second area A2 is disposed to form a plane in the opened state," a portion of the second area A2 may remain in the curved shape. Likewise, although it is stated that "in the closed state, the second area A2 are received inside the second structure 202," a portion of the second area A2 may be positioned outside the second structure 202.

According to an embodiment, the guide member, e.g., the roller 251, may be rotatably mounted on the second structure 202 in a position adjacent to an edge of the second structure 202 (e.g., the second plate 221a). For example, the roller 251 may be disposed adjacent to an edge (e.g., the portion indicated with reference denotation 'IE') of the second plate 221a parallel to the first sidewall 223a. Although no reference denotation is assigned in the drawings, another sidewall may extend from the edge of the second plate 221a, and the sidewall adjacent to the roller 251 may be substantially parallel to the first sidewall 223a. As mentioned above, the sidewall of the second structure 202 adjacent to the roller 251 may be formed of a material that transmits light, and a portion of the second area A2 may provide visual information via the portion of the second structure 202 while being received in the second structure 202.

According to various embodiments, an end of the roller 251 may be rotatably coupled to the second sidewall 223b, and the other end thereof may be rotatably coupled to the third sidewall 223c. For example, the roller 251 may be mounted on the second structure 202, rotating about the rotation axis R perpendicular to the sliding direction (e.g., direction ① indicated with the arrow in FIG. 2A or 2B) of the first structure 201. The rotation axis R may be disposed substantially parallel to the first sidewall 223a, and may be positioned away from the first sidewall 223a, for example, at one edge of the second plate 221a. According to an embodiment, the gap formed between the outer circumferential surface of the roller 251 and the inner surface of the edge of the second plate 221a may form an entrance through which the display 203 enters the second structure 202.

According to various embodiments, in case that the display 203 is deformed into a curved shape, the roller 251 maintains a radius of curvature of the display 203 to a certain degree, thereby suppressing excessive deformation of the display 203. The term "excessive deformation" may mean that the display 203 is deformed to have a radius of curvature that is too small to damage pixels or signal lines included in the display 203. For example, the display 203 may be moved or deformed while being guided by the roller 251 and may be protected from damage due to excessive deformation. According to an embodiment, the roller 251 may rotate while the display 203 is inserted into or extracted from the second structure 202. For example, the friction between the display 203 and the second structure 202 may be suppressed, allowing the display 203 to smooth the insertion/extraction of the second structure 202.

According to various embodiments, the support sheet 253 may be formed of a material having flexibility and a certain degree of elasticity, for example, a material including an elastic body such as silicone or rubber. As the roller 251 rotates, with the support sheet 253 mounted or attached to the roller 251, the support sheet 253 may be selectively wound around the roller 251. In the illustrated embodiment, a plurality of (e.g., four) support sheets 253 may be arranged along the direction of the rotation axis R of the roller 251. For example, the plurality of support sheets 253 may be mounted on the roller 251 with them a predetermined distance spaced apart from other adjacent support sheets 253, and the support sheets 253 may extend along a direction perpendicular to the rotation axis R. According to an embodiment, one support sheet may be mounted or attached to the roller 251. For example, one support sheet may have a size and shape corresponding to the area in which the support sheets 253 are disposed and the area between the support sheets 253 in FIG. 2C. As such, the number, size, or shape of the support sheets 253 may be appropriately changed depending on the product actually manufactured. According to an embodiment, as the roller 251 rotates, the support sheet 253 may be rolled up on the outer circumferential surface of the roller 251 or may depart from the roller 251 and unfold in a flat plate shape between the display 203 and the third plate 221c. According to an embodiment, the support sheet 253 may be referred to as a "support belt", "auxiliary belt", "support film" or "auxiliary film".

According to various embodiments, an end of the support sheet 253 may be connected to the first structure 201, e.g., the first plate 211a (e.g., slide plate) and, in a closed state (e.g., the state shown in FIG. 2A), the support sheet 253 may be rolled on the roller 251. Therefore, in case that the first plate 211a moves to the opened state (e.g., the state shown in FIG. 2B), the support sheet 253 may be gradually positioned between the second structure 202 (e.g., the third plate 221c) and the display 203 (e.g., the second area A2) or between two portions of the second structure 202.

According to various embodiments, the gap between the surface of the display 203 and the inner surface of the edge of the second plate 221a may differ depending on the degree to which the support sheet 253 is wound around the roller 251. The smaller the arrangement gap is, the easier it is to prevent foreign bodies from flowing in, but in case that the arrangement gap is too small, the display 203 may contact or rub against the second plate 221a. In case that direct contact or friction occurs, the surface of the display 203 may be damaged or the sliding operation of the first structure 201 may be obstructed.

According to various embodiments, the support sheet 253 is wound around the roller 251 in the closed state, thus reducing the gap between the inner surface of the edge of the second plate 221a and the surface of the display 203 while keeping the surface of the display 203 not in contact with the second plate 221a. For example, it is possible to prevent foreign substances from flowing into the inside of the second structure 202 by reducing the arrangement gap in the closed state. According to an embodiment, as the first structure 201 (e.g., the first plate 211a or the slide plate) gradually moves to the open state, the support sheet 253 may move away from the roller 251 and gradually move to the space between two portions of the second structure 202 (e.g., the second plate 221a or the third plate 221c). For example, as the first structure 201 moves to the open state, the arrangement gap gradually increases, suppressing direct friction or contact between the display 203 and other structures (e.g., the second plate 221a) and hence preventing possible damage to the surface of the display 203 due to friction or contact. According to an embodiment, the thickness of the support sheet 253 may gradually increase as the distance between an end (e.g., the portion fixed to the roller 251) and the other end (e.g., the portion fixed to the first plate 211a) reduces. Use of the thickness profile of the support sheet 253 allows for adjustment of the arrangement gap in the closed state and the open state.

According to various embodiments, the electronic device 200 may include at least one elastic member 231 and 233 formed of a low density elastic body such as a sponge or a brush. For example, the electronic device 200 may include a first elastic member 231 mounted on one end of the display 203 and, according to an embodiment, the electronic device 200 may further include a second elastic member 233 mounted on the inner surface of the edge of the second plate 221a. The first elastic member 231 may be substantially disposed in the inner space of the second structure 202 and may be positioned to correspond to the edge of the second plate 221a in the open state (e.g., the state shown in FIG. 2B). According to an embodiment, the first elastic member 231 may move in the inner space of the second structure 202 as the first structure 201 slides. In case that the first structure 201 moves from the closed state to the opened state, the first elastic member 231 may move toward the edge of the second plate 221a. In case that the first structure 201 reaches the opened state, the first elastic member 231 may contact the inner surface of the edge of the second plate 221a. For example, in the opened state, the first elastic member 231 may seal the gap between the inner surface of the edge of the second plate 221a and the surface of the display 203. According to an embodiment, in case of moving from the closed state to the open state, the first elastic member 231 may move (e.g., slidingly contact) while in contact with the second plate 221a. For example, if a foreign body has been introduced in the gap between the second area A2 and the second plate 221a in the closed state, in case of moving to the opened state, the first elastic member 231 may discharge the foreign body to the outside of the second structure 202.

According to various embodiments, the second elastic member 233 may be attached to the inner surface of the edge of the second plate 221a, and may be disposed to substantially face the inner surface of the display 203. In the closed state, the gap (e.g., the arrangement gap) between the surface of the display 203 and the inner edge of the second plate 221a may be substantially determined by the second elastic member 233. According to an embodiment, in the closed state, the second elastic member 233 may contact the surface of the display 203, substantially sealing the arrangement gap. According to an embodiment, the second elastic member 233 may be formed of a low-density elastic body such as a sponge or a brush, so that the surface of the display 203 may be prevented from damage despite direct contact with the display 203. According to an embodiment, as the first structure 201 gradually moves to the open state, the arrangement gap may increase. For example, the display 203 may gradually expose the second area A2 to the outside of the second structure 202 substantially without contacting or rubbing against the second elastic member 233. In case that the first structure 201 reaches the open state, the first elastic member 231 may contact the second elastic member 233. For example, in the open state, the first elastic member 231 and the second elastic member 233 may seal the arrangement gap, blocking influx of foreign substances.

According to various embodiments, the electronic device 200 may further include a guide rail(s) 255 and/or an actuating member(s) 257. The guide rail(s) 255 may be mounted on the second structure 202, e.g., the third plate 221c to guide a sliding of the first structure 201 (e.g., the first plate 211a or the slide plate). The actuating member(s) 257 may include a spring or a spring module that provides an elastic force in a direction to allow both ends thereof to move away from each other. An end of the actuating member(s) 257 may be rotatably supported by the second structure 202, and the other end may be rotatably supported by the first structure 201. In case that the first structure 201 slides, both the ends of the actuating member(s) 257 may be positioned closest to each other (hereinafter, a 'nearest point') at any one point between the closed state and the opened state. For example, in the interval between the nearest point and the closed state, the actuating member(s) 257 may provide an elastic force to the first structure 201 in a direction moving toward the closed state and, in the interval between the nearest point and the opened state, the actuating member(s) 257 may provide an elastic force to the first structure 201 in a direction moving toward the opened state.

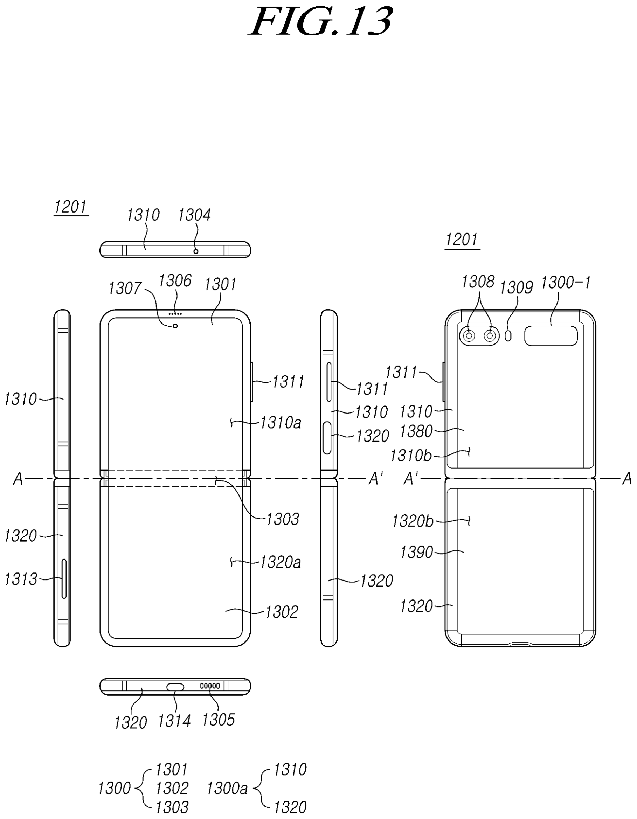

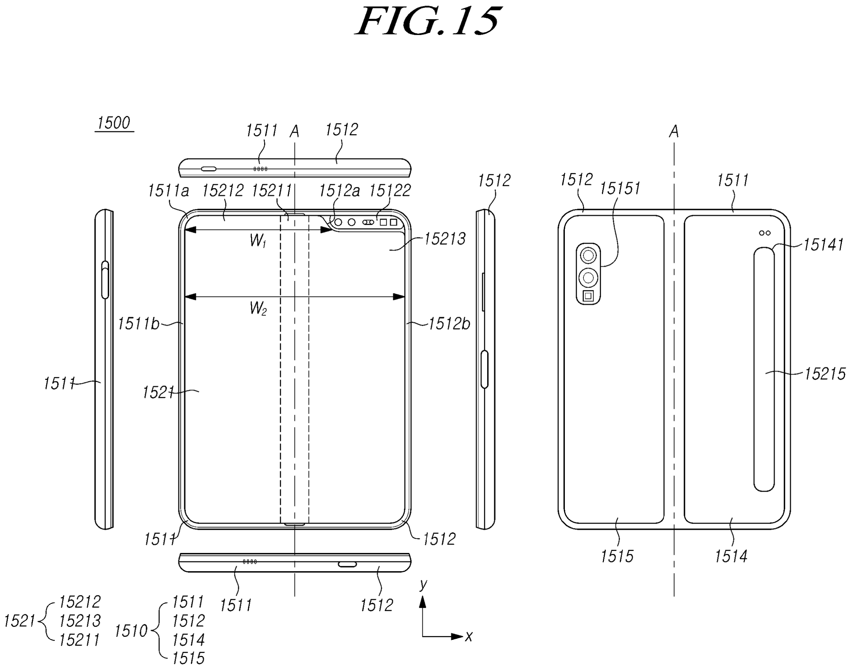

FIG. 3A is a cross-sectional view illustrating a display 300 (e.g., the display module 160 of FIG. 1 or the flexible display 203 of FIG. 2) according to an embodiment. FIG. 3A may be understood as a cross-sectional view illustrating the display 300 in an unfolded state. The display 300 is not limited to the flexible display 203 described in connection to FIG. 2 and may be applied to various types of displays. For example, the display 300 may also be applied to a foldable display (e.g., the display 1300 of FIGS. 13 to 14 and the display 1521 of FIGS. 15 to 16). Further, it may be applied to flexible displays that deform into various shapes.

Referring to FIG. 3A, an electronic device (e.g., the electronic device 101 of FIG. 1 or the electronic device 200 of FIGS. 2A to 2C) may include a window member and a display 300. The display 300 may be implemented as a separate component from the window member or may be integrated therewith. The window member may be disposed on the display 300 to form at least a portion of an outer surface of the electronic device 200. For example, the window member may form the first area (e.g., the first area A1 of FIGS. 2A and 2B) and the second area (e.g., the second area A2 of FIG. 2B) of the display. Hereinafter, it is assumed that the window member is integrated with the display 300.

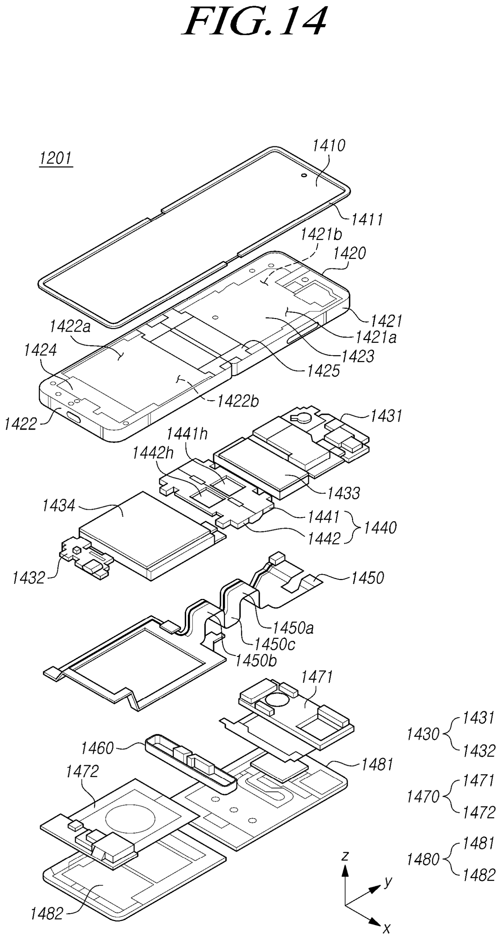

According to an embodiment, the display 300 may undergo shape deformation in specific areas corresponding to folding or winding of a portion of the electronic device 200 (e.g., the roller 251 or hinge of FIG. 2C). In this case, an area where shape deformation occurs may be referred to as a "deformable portion (or deformable area)" of the display 300, and an area where shape deformation does not occur may be referred to as a "non-deformable portion (or non-deformable area)" of the display 300. For example, at least a portion of the first area A1 of the display 300 may correspond to the non-deformable portion, and at least a portion of the second area A2 of the display 300 may correspond to the deformable portion. For example, in a foldable flexible display (e.g., the display 1300 of FIG. 13 or the display 1521 of FIG. 15), the deformable portion may correspond to a folding area (e.g., the folding area 1303 of FIG. 14 or the folding area 15211 of FIG. 19).

According to an embodiment, the window member may cover at least a portion of the display 300 and protect the display 300 from external impacts.

According to an embodiment, the window member may have predetermined transmittance and refractive index. Thereby, the display 300 may be visually exposed to the outside of the electronic device 200 through the window member.

According to an embodiment, the window member may be formed by stacking layer(s) composed of at least one or more materials. In other words, the window member may have a "stacked structure." The window member having the stacked structure may have substantially the same thickness, but the window member may have different thicknesses in predetermined areas if necessary.

According to an embodiment, the window member may have a glass layer 302 or a protective layer 303. The glass layer 302 may be formed of a substantially transparent and flexible material. For example, at least a portion of the glass layer 302 may include bendable thickness glass (e.g., ultra-thin glass (UTG)).

According to an embodiment, the glass layer 302 may include a plurality of areas having different thicknesses and/or widths. For example, the glass layer 302 may include at least one flexible area and a flat area.

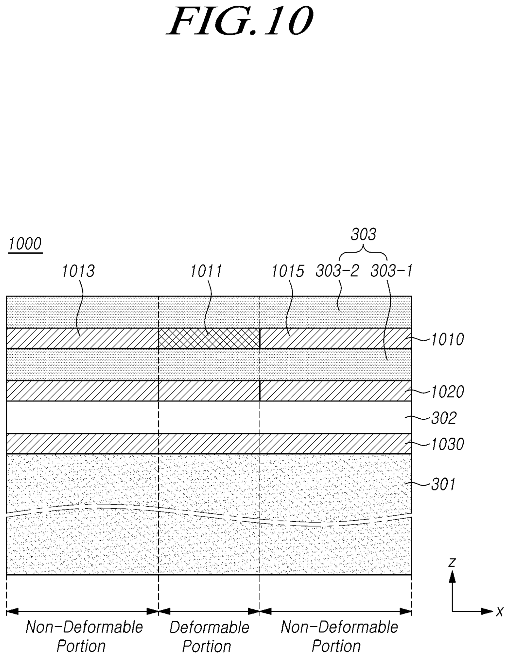

According to an embodiment, the protective layer 303 may be implemented as a film layer composed of at least one film. The protective layer 303 may be implemented as a single protective layer. The protective layer 303 may be implemented as a plurality of protective layers. In case that the protective layer 303 is implemented as a plurality of protective layers (e.g., in case of being implemented as the first protective layer 303-1 and the second protective layer 303-2 of FIGS. 10 to 12), the protective layer 303 may include a high-hardness protective layer and a low-hardness protective layer. The protective layer 303 may absorb at least a portion of force applied to the electronic device 200. The protective layer 303 may include a plurality of areas having different thicknesses and/or widths. For example, the protective layer 303 may include at least one flexible area and a flat area.

According to an embodiment, the protective layer 303 may be composed of synthetic resin (e.g., polyethylene terephthalate (PET) or polyurethane (PU)). Further, the protective layer 303 may be composed of film-type substrates using resins such as PI, PE, PMMA, PC, PS, etc.

According to an embodiment, for the display 300 to form a stacked structure, the window member may include adhesive layers 310, 320. The adhesive layers 310, 320 may have predetermined stiffness (e.g., storage modulus), predetermined elasticity, predetermined transmittance, and predetermined refractive index. The adhesive layers 310, 320 may physically connect layers forming the display stacked structure. The adhesive layers 310, 320 may be composed of polymer material.

According to an embodiment, the adhesive layers 310, 320 may be implemented as pressure sensitive adhesive (PSA). The adhesive layers 310, 320 may have high elastic force due to low modulus. The adhesive layers 310, 320 may reduce stress acting on the display 300.

According to an embodiment, the adhesive layers 310, 320 may include a first adhesive layer 310 and a second adhesive layer 320. The first adhesive layer 310 and the second adhesive layer 320 may be formed of substantially the same material. The first adhesive layer 310 may be disposed on one surface (e.g., upper surface) of the glass layer 302 to bond the glass layer 302 and the protective layer 303. In other words, the first adhesive layer 310 may be disposed between the glass layer 302 and the protective layer 303. The second adhesive layer 320 may be disposed on one surface of the display panel 301 to bond the glass layer 302 and the display panel 301. In other words, the second adhesive layer 320 may be disposed between the glass layer 302 and the display panel 301.

According to an embodiment, the first adhesive layer 310 may include a plurality of areas having different thicknesses and/or widths.

For example, the plurality of areas may include a first area 311, a second area 313, and a third area 315 of the first adhesive layer 310. The first area 311 may correspond to the deformable portion, and the second area 313 and the third area 315 may correspond to the non-deformable portion.

According to an embodiment, the first area 311 may have a predetermined width and thickness. The width and thickness of the second area 313 and the third area 315 may be substantially the same as or different from the first area 311.

According to an embodiment, the widths of the first surface 3111 and the second surface 3112 of the first area 311 may be substantially the same or different. Specifically, the width w' of the second surface 3112 may be greater than or equal to the width of the first surface 3111.

For example, in case that the width w of the first surface 3111 and the width w' of the second surface 3112 are substantially the same, i.e., in case that w=w', the cross-section of the first area 311 may have a rectangular shape.

For example, in case that the width w' of the first surface 3111 and the width w" of the second surface 3112 are different, i.e., in case that w<w', the cross-section of the first area 311 may have a substantially trapezoidal shape with a longer lower base.

According to an embodiment, the width w, w' of the first area 311 may be determined considering the radius of curvature of the variable area A2 (e.g., the inner radius of curvature r1 or outer radius of curvature r2 of FIG. 3B). The first area 311 may have a width of at least a predetermined length to respond to external forces (e.g., external forces F1, F2 of FIG. 3B) generated as the variable area A2 deforms.

For example, the width w, w' of the first area 311 may be at least greater than or equal to the length of the first area of the circumference formed by the inner radius of curvature r1 of the variable area A2. Here, the first area may be understood as, e.g., 1/2 of the circumference. Specifically, the width w, w' of the first area may be greater than or equal to 1/2 of the circumference formed by the inner radius of curvature r1 (i.e., $\pi$). However, this is not limited thereto, and the width w, w' of the first area 311 may be determined based on the shape of the variable area A2 or the external forces F1, F2 acting according to deformation of the variable area A2, in addition to the inner radius of curvature r1.

According to an embodiment, the first to third areas 311, 313, 315 may be disposed independently. In other words, the first to third areas 311, 313, 315 may be disposed partitioned based on predetermined boundary surfaces. The first to third areas 311, 313, 315 may be disposed adjacently. For example, physical properties (e.g., elasticity, transmittance, and/or refractive index) may be distinguished based on the boundary surface between the first area 311 and the second area 313. Physical properties may be distinguished based on the boundary surface between the first area 311 and the third area 315.

According to an embodiment, the physical properties of the first to third areas 311, 313, 315 may gradually change. For example, the refractive index and/or transmittance may continuously change based on the boundary surface between the first area 311 and the second area 313. The refractive index and/or transmittance may continuously change based on the boundary surface between the first area 311 and the third area 315. For example, the thickness may gradually change based on the boundary surface between the first area 311 and the second area 313. The thickness may gradually change based on the boundary surface between the first area 311 and the third area 313.

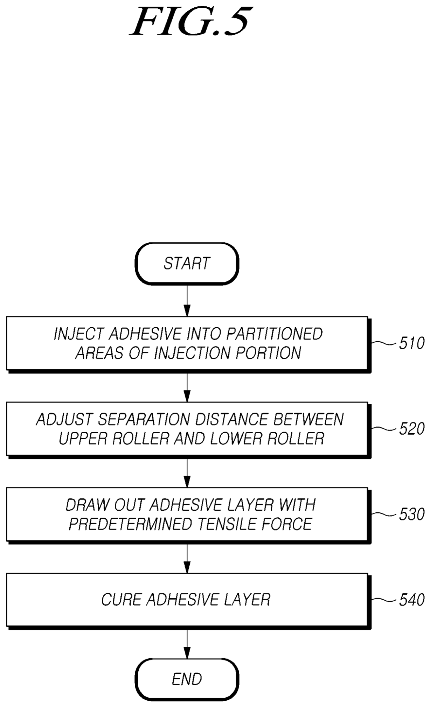

According to an embodiment, due to the gradual change in thickness, refractive index, and/or transmittance at the boundary surfaces of the first to third areas 311, 313, 315, visual perception of the boundary surfaces may be minimized. The process for manufacturing the first to third areas 311, 313, 315 such that physical properties gradually change at the boundary surfaces is described below in FIGS. 5 to 8.

According to an embodiment, the thickness of the first adhesive layer 310 may be 10$\mu$m to 100$\mu$m. The difference in thickness between the first area 311 and the second area 313 (or the third area 315) included in the first adhesive layer 310 may be 5 $\mu$m or less.

According to an embodiment, the stiffness of the first area 311 may be lower than the stiffness of the second area 313 and/or the third area 315. The modulus of the first area 311 may be lower than the modulus of the second area 313 and/or the third area 315. In other words, the first area 311 may be composed of a low modulus material, and the second area 313 and/or the third area 315 may be composed of a high modulus material. The low modulus material and the high modulus material may be implemented by differences in monomers forming polymers or molecular structures of materials constituting the materials.

For example, the storage modulus of the first area 311 may be 0.1MPa or less at 25°C. The storage modulus of the second area 313 and/or the third area 315 may be 0.2MPa or more at 25°C. Here, the storage modulus of the first to third areas 311, 313, 315 may be understood as storage modulus values in case that a load of 0.5N is applied in the width direction (e.g., z-axis direction) of the first adhesive layer 310.

According to an embodiment, by providing different modulus values for the first to third areas 311, 313, 315 included in the first adhesive layer 310, the display 300 may have elastic recovery force in areas where deformation occurs (e.g., the deformable portion or the second area A2 of FIG. 2B) while having stiffness above a critical level in areas where deformation does not occur (e.g., the non-deformable portion or the second region A1 of FIG. 2A). To identify the stiffness of the first to third areas 311, 313, 315, pen drop tests and pen pressure tests may be performed, as described below.

According to an embodiment, the second adhesive layer 320 may be implemented with a material having the same modulus value corresponding to the deformable portion and the non-deformable portion. However, this is not limited thereto, and the second adhesive layer 320 may also be implemented with materials having different moduli in areas corresponding to the deformable portion and non-deformable portion, similar to the first adhesive layer 310.

It may be understood that the adhesive layer to be described below may be implemented with the same structure as the first adhesive layer 310 composed of low modulus areas and high modulus areas.

FIG. 3B is a cross-sectional view illustrating the display 300 according to an embodiment. FIG. 3B may be understood as a cross-sectional view for representing external forces acting in response to deformation occurring in a predetermined area (e.g., the second area A2 of FIG. 2B) of the display 300 of FIG. 3A.

Referring to FIG. 3B, the first section A1 (e.g., the first area A1 of FIG. 2A) may correspond to the non-deformable portion of FIG. 3A, and the second section A2 may correspond to the deformable portion of FIG. 3A.

According to an embodiment, in response to deformation occurring in the second section A2 of the display 300, external forces F1, F2 may occur on the inner side and outer side of the display 300, respectively. For example, compressive stress F2 may act on the inner side of the display 300 (e.g., the inner area where the glass layer 302 is provided in the second section A2), and tensile stress F1 may act on the outer side of the display 300 (e.g., the area where the protective layer 303 is provided in the second section A2). Therefore, the adhesive layers (e.g., the first adhesive layer and second adhesive layer 310, 320 of FIG. 3A) included in the window area may have minimum elasticity to withstand the stress from compression and/or tension. In other words, the adhesive layers 310, 320 may have elasticity for at least the outer circumferential surface formed by the outer radius of curvature r2 (e.g., $\pi$) in the curved surface formed by the second section A2. Here, the radius of curvature may be set based on the center C (e.g., the sliding central axis R of FIG. 2C), where the outer radius of curvature r2 may be defined as the distance from the center C to the outermost point of the second area A2, and the inner radius of curvature r1 may be defined as the distance from the center C to the glass layer 302. However, this is not limited thereto, and the outer radius of curvature r2 and inner radius of curvature r1 may be defined variously according to the variable shape of the electronic device 200. For example, the inner radius of curvature r1 and/or outer radius of curvature r2 may be defined variously according to the direction of the variable shape, the variable angle of the variable shape, and the variable form.

According to an embodiment, the adhesive layers 310, 320 may provide fixing force for the layer attached to one surface (e.g., the protective layer 303) and the layer attached to the other surface (e.g., the glass layer 302) of the adhesive layer (e.g., the first adhesive layer 310) in response to the stress by having predetermined adhesive force.

According to an embodiment, the first area 311 may have predetermined durability. For example, in case that the radius of curvature is less than twice the outer radius r2, the first area 311 may minimize the occurrence of cracks in response to deformation occurring a critical number of times. The critical number may be, e.g., substantially 200,000 deformations (e.g., the number of withdrawals or insertions of the electronic device 200, or the number of foldings of the electronic device).

According to an embodiment, the width of the first area 311 may be determined based on the inner radius of curvature r2. For example, the width of the first area 311 may be determined in proportion to the combined length of the inner radius of curvature r2 and the width of the glass layer 302.

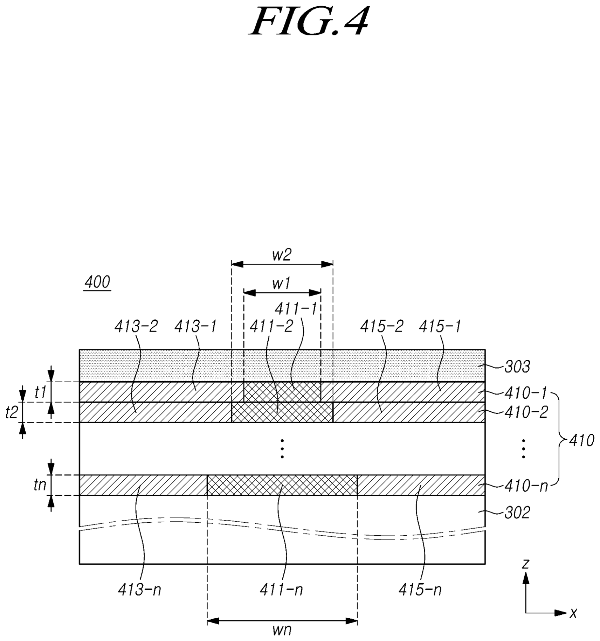

According to an embodiment, in case that the adhesive layer 310 is implemented as a plurality of layers, the width of the adhesive layer 310 may increase in response to an increase in the radius of curvature. This is described below in FIG. 4.

According to an embodiment, pen drop tests and pen pressure tests may be performed to determine the durability provided by the first area 311 (e.g., the first area 311 of FIG. 3A) and the second area 313 (e.g., the second area 313 of FIG. 3A) included in the first adhesive layer 310. Hereinafter, test results for the second area 313 may also apply to the third area 315.

According to an embodiment, the pen drop test may be understood as durability corresponding to dynamic impact applied to the display 300. Here, dynamic impact may be understood as impact from moving at high speed. For example, it may be understood as the impact received in case that the electronic device 200 falls to the ground. The impact time from dynamic impact is $10^{-3}$ to $10^{-5}$ seconds, which may be understood as $10^3$ to $10^5$ Hz in case of being converted to frequency.

According to an embodiment, the pen pressure test may be understood as durability corresponding to static impact applied to the display 300. Here, static impact may be understood as impact from moving at slow speed. For example, it may be understood as impact from external force applied in the gravity direction according to the load of an object with predetermined weight on the display 300 of the electronic device 200. The impact time from static impact is $10^{-1}$ to 10 seconds, which may be understood as $10^{-1}$ to $10^1$ Hz in case of being converted to frequency.

According to an embodiment, a pen drop test for testing the impact resistance of the adhesive layer 310 may be performed as follows. The pen drop test may be performed by dropping an object (e.g., a pen) onto an evaluation specimen including the adhesive layer. The evaluation specimen may be prepared with a stacked structure of a glass member (e.g., the glass layer 302 of FIG. 3A), an adhesive layer (e.g., the first adhesive layer 310 of FIG. 3A), and a protective member (e.g., the protective layer 303 of FIG. 3A). For example, the thickness of the glass member 302 may be 25 $\mu$m to 40$\mu$m. The thickness of the adhesive layer 310 may be 35$\mu$m to 50$\mu$m. The thickness of the protective member 303 may be 50$\mu$m to 100$\mu$m, preferably 65$\mu$m to 75$\mu$m. The protective member 303 may be formed of PET.

According to an embodiment, the pen drop test may be performed by placing the evaluation specimen on the upper surface of a structure in which granite (or stainless steel) with predetermined thickness and a film of 60$\mu$m to 80$\mu$m are stacked, dropping a pen from a predetermined height above the evaluation specimen, and recording the maximum height where the glass member 302 does not break. Here, the pen may have a weight of 5g to 6g, and the diameter of one end of the pen falling onto the evaluation specimen may be 0.3mm. The pen may freely fall toward the evaluation specimen due to gravity.

According to an embodiment, pen drop test results corresponding to areas included in the adhesive layer 310 (e.g., the first to third areas 311, 313, 315) may be derived. In other words, the higher the modulus of the material constituting the areas 311, 313, 315, the higher the pen drop test results may be derived. Hereinafter, the pen drop test results may be derived with values indicated in Table 1.

[Table 1]

|  | Modulus (MPa) | Breakage Height (cm) |
|---|---|---|
| Low Modulus | 0.02 | 8.4 |
|  | 0.03 | 8.6 |
|  | 0.07 | 10.8 |
|  | 0.1 | 12.4 |
| High Modulus | 0.2 | 15.4 |
|  | 0.5 | 26.3 |
|  | 0.9 | 34.3 |

Referring to Table 1, it may be understood that as the modulus value of the area constituting the adhesive layer 310 increases, the height where breakage occurs due to pen drop increases. Since the first area 311 included in the adhesive layer 310 is composed of low modulus material and the second area 313 included in the adhesive layer 310 is composed of high modulus material, the difference between the breakage height of the first area 311 and the breakage height of the second area 313 may be at least 3cm or more.

According to an embodiment, the storage modulus of the adhesive layer 310 may increase in response to increasing impact frequency. In other words, the adhesive layer 310 may have a non-linear increase in storage modulus in a specific section where the impact frequency increases. For example, the high modulus material of the second area 313 included in the adhesive layer 310 may have a storage modulus increase of more than 100 times in response to the frequency of external impact increasing from $10^1$Hz to $10^3$Hz. <Reference FIG. 1> illustrated below illustrates a graph of storage modulus according to the frequency of external impact.

<Reference FIG. 1>

The pen pressure test for testing the impact resistance of the adhesive layer 310 may be performed as follows. The pen pressure test may be performed by pressing an object (e.g., a pen) with predetermined pressure onto an evaluation specimen including the adhesive layer. The evaluation specimen may be prepared with a stacked structure of the glass member 302, adhesive layer 310, and protective member 303. For example, the thickness of the glass member 302 may be 25μm to 40μm. The thickness of the adhesive layer 310 may be 35μm to 50μm. The thickness of the protective member 303 may be 50μm to 100μm, preferably 65μm to 75μm. The protective member 303 may be formed of PET.

According to an embodiment, the pen pressure test may be performed by placing the evaluation specimen on the upper surface of a structure in which granite (or stainless steel) with predetermined thickness and a urethane film having predetermined hardness (e.g., 30Hs shore hardness) are stacked, pressing a pen onto the evaluation specimen, and recording the maximum force (unit: kgf) where the glass member 302 does not break. Here, the pen may have a weight of 5g to 6g, and the diameter of one end of the pen falling onto the evaluation specimen may be 0.3mm. The pen may be pressed at a speed of 10mm per minute.

According to an embodiment, pen pressure test results corresponding to areas included in the adhesive layer 310 (e.g., the first to third areas 311, 313, 315) may be derived. In other words, the higher the modulus of the material constituting the areas 311, 313, 315, the higher the pen pressure test results may be derived. Hereinafter, the pen pressure test results may be derived with values indicated in Table 2.

[Table 2]

|  | Modulus (MPa) | Breakage Force (kgf) |
|---|---|---|
| Low Modulus | 0.02 | 1.1 |
|  | 0.03 | 1.1 |
|  | 0.07 | 1.3 |
|  | 0.1 | 1.3 |
| High Modulus | 0.2 | 1.4 |
|  | 0.5 | 1.4 |
|  | 0.9 | 1.4 |

Referring to Table 2, it may be understood that as the modulus value of the area constituting the adhesive layer 310 increases, the force where breakage occurs due to pen pressure increases. Since the first area 311 included in the adhesive layer 310 is composed of low modulus material and the second area 313 included in the adhesive layer 310 is composed of high modulus material, the minimum force where breakage of the glass layer 302 occurs in the first area 311 may be 1.3kgf or less, and the minimum force where breakage of the glass layer 302 occurs in the second area 313 may be 1.4kgf or more.

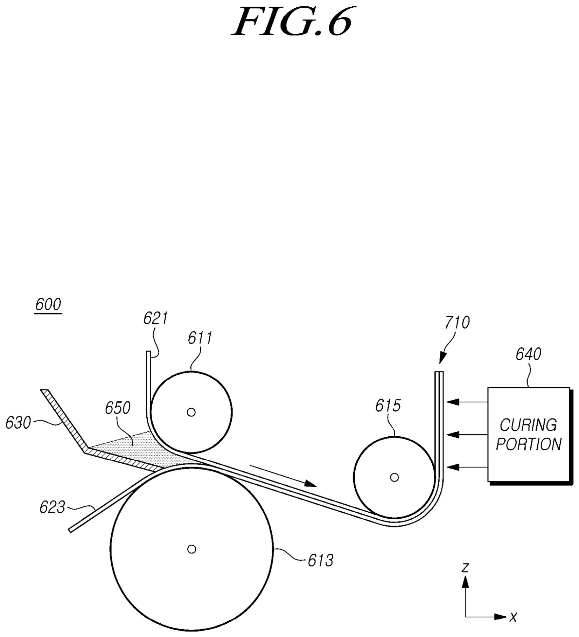

According to an embodiment, it may be detected whether adhesives having different modulus characteristics are provided corresponding to the first area 311 and the second area 313. For this purpose, the adhesive forming either the first area 311 or the second area 313 may include a fluorescent material. For example, the adhesive forming the first area (e.g., the second adhesive 653 of FIG. 6) may include a fluorescent material, or the adhesive forming the second area 313 (e.g., the first adhesive 651 and/or third adhesive 655 of FIG. 6) may include a fluorescent material. The fluorescent material may include, e.g., stilbenedisulfonic acid-based, coumarin-based, pyrazoline-based, naphthalimide-based, or bisbenzoxazolyl-based materials. The fluorescent material may absorb light having a specific wavelength range and emit light. The fluorescent material may, e.g., absorb light of 300 to 400nm and emit light. This is described below in FIG. 5 and subsequent figures.

FIG. 4 is a cross-sectional view illustrating a display 400 (e.g., the display 300 of FIG. 3) according to an embodiment. The first adhesive layer 410 illustrated in FIG. 4 may be understood as illustrating a case where the first adhesive layer (e.g., the first adhesive layer 310 of FIGS. 3A and 3B) is stacked as at least a plurality of layers (410-1, 410-2, ...410-n). Hereinafter, redundant descriptions are omitted and differences will be primarily illustrated.

Referring to FIG. 4, the first adhesive layer 410 may be composed of at least a plurality of adhesive layers stacked together. The plurality of adhesive layers may include a 1-1th adhesive layer 410-1, a 1-2th adhesive layer 410-2, ...a 1-nth adhesive layer 410-n (where n is a natural number of 2 or more). The plurality of adhesive layers 410-1, 410-2, ...410-n may include first areas 411-1, 411-2, ...411-n composed of low modulus material and second areas 413-1, 413-2, ...413-n and third areas 415-1, 415-2, ...415-n composed of high modulus material. For example, the 1-1th adhesive layer 410-1 may include a 1-1th area 411-1, a 2-1th area 413-1, and a 3-1th area 415-1. The 1-2th adhesive layer 410-2 may include a 1-2th area 411-2, a 2-2th area 413-2, and a 3-2th area 415-2. The 1-nth adhesive layer 410-n may include a 1-nth area 411-n, a 2-nth area 413-n, and a 3-nth area 415-n. The 1-1th area 411-1, 1-2th area 411-2, ...and 1-nth area 411-n may be collectively referred to as "first areas 411-1, 411-2, ...411-n." Similarly, the 2-1th area 413-1, 2-2th area 413-2, ...and 2-nth area 413-n may be collectively referred to as "second areas 413-1, 413-2, ...413-n," and the 3-1th area 415-1, 3-2th area 415-2, ...and 3-nth area 415-n may be collectively referred to as "third areas 415-1, 415-2, ...415-n."

According to an embodiment, the width of the 1-1th area 411-1 may be defined as w1, the width of the 1-2th area 411-2 as w2, and the width of the 1-nth area 411-n as wn.

According to an embodiment, the first areas 411-1, 411-2, ...411-n may have substantially the same central axis. For example, the first areas 411-1, 411-2, ...411-n may be stacked based on an axis corresponding to the center of the deformable portion (e.g., the deformable portion of FIG. 3A).

According to an embodiment, the first adhesive layer 410 may have narrower widths of the first areas 411-1, 411-2, ...411-n corresponding to the thickness direction (e.g., z-axis direction of FIG. 3A) in which the display 400 is exposed. In other words, w1, w2, ...and wn may be set in the relationship of w1≤w2≤w3≤...≤wn.

According to an embodiment, the widths of the first areas 411-1, 411-2, ...411-n may be determined considering the inner radius of curvature (e.g., the inner radius of curvature r1 of FIG. 3B). The width of the first adhesive layer 410 may increase in response to an increase in the inner radius of curvature r1. Here, the inner radius of curvature r1 may be understood as the shortest distance from the center point of the radius of curvature located outside the protective layer 203 to the 1-1th area 411-1. For example, the width of the 1-1th area 411-1 may have a value at least greater than half the circumference ($\pi$*r1) by the inner radius of curvature r1.

According to an embodiment, the thickness of the 1-1th area 411-1 may be defined as t1, the thickness of the 1-2th area 411-2 as t2, and the thickness of the 1-nth area 411-n as tn.

According to an embodiment, the widths w1, w2, ...wn of each area constituting the first areas 411-1, 411-2, ...411-n may be determined based on the inner radius of curvature r1 and the thickness of adjacent adhesive layers. The widths w1, w2, ...wn may be determined by the radius of curvature, which is the distance from the center point.

For example, the width w2 of the 1-2th area 411-2 may have a value at least greater than half the circumference ($\pi$*(r1+t1)) by the sum of the thickness t1 of the 1-1th area 411-1 and the inner radius of curvature r1.

For example, the width w3 of the 1-3th area 411-3 may have a value at least greater than half the circumference ($\pi$*(r1+t1)) by the sum of the thickness t1 of the 1-1th area 411-1, the thickness t2 of the 1-2th area 411-2, and the inner radius of curvature r1.

For example, the width wn of the 1-nth area 411-n may have a value at least greater than half the circumference ($\pi$*(r1+t1+t2+...+tn-1)) by the sum of the thickness t1 of the 1-1th area 411-1 and the inner radius of curvature r1. In other words, the width wn of the 1-nth area 411-n may be defined as in Equation 1.

[Equation 1]

$$wn = \pi * \sum_{i=1}^{i=n} (r1 + ti)$$

According to an embodiment, in case that the first adhesive layer 410 is provided as at least a plurality of layers, and the widths of the first areas 411-1, 411-2, ...411-n included in the plurality of layers narrow corresponding to the stacking thickness direction, the variable characteristics of the display 400 may be maintained while maximizing high modulus material (e.g., the second areas 413-1, 413-2, ...413-n and third areas 415-1, 415-2, ...415-n) near where the display 400 is exposed to the outside, thereby providing predetermined durability.

According to an embodiment, for the first adhesive layer 410 to be composed of a plurality of layers, the 1-1th adhesive layer 410-1, 1-2th adhesive layer 410-2, ...and 1-nth adhesive layer 410-n constituting the first adhesive layer 410 may be stacked. The process and device for manufacturing the first adhesive layer 410 is described in connection to FIGS. 5 to 7.

FIG. 5 is a flowchart for manufacturing an adhesive layer (e.g., the adhesive layer 410 of FIG. 4) according to an embodiment. In other words, it may be understood as a process flowchart for manufacturing the plurality of adhesive layers (e.g., the 1-1th adhesive layer 410-1, 1-2th adhesive layer 410-2, ...1-nth adhesive layer 410-n) constituting the adhesive layer 410. The single adhesive layer (the adhesive layer 710 of FIG. 6) illustrated in FIGS. 5 to 7 below may correspond to the 1-1th adhesive layer 410-1. Some steps illustrated in the flowchart may be omitted or repeated according to the process, and the order of some steps may be changed.

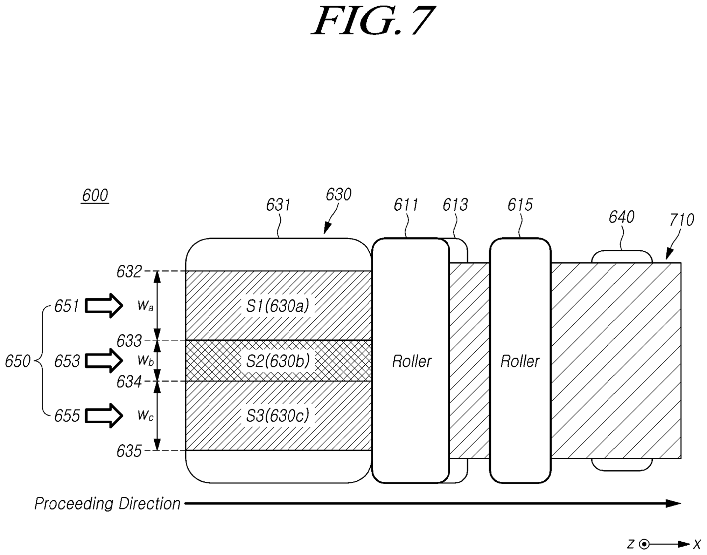

Referring to FIG. 5, in step 510, adhesive (e.g., the adhesive 650 of FIG. 6) may be injected into partitioned areas of an injection portion (e.g., the injection portion 630 of FIG. 6). The injection portion 630 may have a predetermined space for injecting the adhesive 650 formed by a base surface (e.g., the base surface 631 of FIG. 7) having a predetermined area and sidewalls (e.g., the first sidewall 632 and second sidewall 635 of FIG. 7) having a predetermined height. The injection portion 630 may be partitioned into one or multiple areas. In case that the injection portion 630 is partitioned into at least two or more areas, the injection portion 630 may include one or more partitions (e.g., the first partition 633 and second partition 634 of FIG. 7) having a predetermined height.

According to an embodiment, the injection portion 630 may include a first injection portion (S1) 630a formed by the base surface 631, first sidewall 632, and first partition 633. The injection portion 630 may include a second injection portion (S2) 630b formed by the base surface 631, first partition 633, and second partition 634. The injection portion 630 may include a third injection portion (S3) 630c formed by the base surface 631, second partition 634, and second partition 635.

According to an embodiment, the width of the first injection portion 630a may be set as $w_a$, the width of the second injection portion 630b as $w_b$, and the width of the third injection portion 630c as $w_c$. By adjusting the positions of the first and second sidewalls 631, 635 and the first to third partitions 632, 633, 634, the widths $w_a$, $w_b$, $w_c$ of the first to third injection portions 630a to 630c may be changed. The widths $w_a$, $w_b$, $w_c$ of the first to third injection portions 630a to 630c may be substantially the same as the widths of the first to third areas 411-1, 413-1, 415-1 included in the adhesive layer 410-1.

According to an embodiment, the adhesive 650 may be injected into the first to third injection portions 630c. The adhesive 650 may include a first adhesive 651, a second adhesive 653, and a third adhesive 655. The first to third adhesives 651, 653, 655 may have different physical properties. For example, the first adhesive 651 and third adhesive 655 may be high modulus material adhesives, and the second adhesive 653 may be a low modulus material adhesive. The injected first to third adhesives 651, 653, 655 may be in a liquid state with predetermined tackiness.

According to an embodiment, the first adhesive 651 may be injected into the first injection portion 630a. The second adhesive 653 may be injected into the second injection portion 630b. The third adhesive 655 may be injected into the third injection portion 630c.

According to an embodiment, at least one of the adhesives having different moduli may include a fluorescent material. The fluorescent material may be provided to detect whether the adhesives 651, 653, 655 are provided in areas partitioned based on boundary surfaces in the adhesive layer manufactured by the first to third adhesives 651, 653, 655.

According to an embodiment, either the low modulus material adhesive or the high modulus material adhesive may include a fluorescent material. The fluorescent material may include, e.g., stilbenedisulfonic acid-based, coumarin-based, pyrazoline-based, naphthalimide-based, or bisbenzoxazolyl-based materials. The fluorescent material may absorb light having a specific wavelength range and emit light. The fluorescent material may, e.g., absorb light of 300 to 400nm and emit light.

For example, in case that the first adhesive 651 and third adhesive 655 are high modulus material adhesives and the second adhesive 653 is a low modulus material adhesive, the second adhesive 653 may include the fluorescent material, or the first adhesive 651 and third adhesive 655 may include the fluorescent material. Hereinafter, for convenience of description, it will be assumed that the second adhesive 653, which is a low modulus material, includes the fluorescent material, and the first adhesive and third adhesive 651, 655 do not include the fluorescent material. However, this is not limited thereto, and the second adhesive 653 may not include the fluorescent material while the first adhesive and third adhesive 651, 655 may include the fluorescent material.

According to an embodiment, the second adhesive 653 may include a predetermined ratio of fluorescent material. In other words, the second adhesive 653 may be manufactured by mixing the fluorescent material in the predetermined ratio with the low modulus material adhesive member. The predetermined ratio may be set to, e.g., less than 5%. However, this is not limited thereto, and the predetermined ratio may be set at a level that does not affect the modulus characteristics or optical characteristics of the second adhesive 653. In other words, in case that the change level of elastic modulus due to the fluorescent material mixed in the second adhesive 653 is below a critical level, the predetermined ratio may be changed.

According to an embodiment, in step 520, the separation distance between a upper roller (e.g., the first roller 611 of FIG. 6) and a lower roller (e.g., the second roller 613 of FIG. 6) may be adjusted. A first film (e.g., the first film 621 of FIG. 6) may be fed below the first roller 611, and a second film (e.g., the second film 623 of FIG. 6) may be fed above the second roller 613. The adhesive 650 may be disposed between the first film 621 and the second film 623.

According to an embodiment, by adjusting the separation distance between the first roller 611 and the second roller 613, the thickness of the adhesive layer 410-1 may be adjusted. The first to third adhesives 651, 653, 655 disposed between the first film 621 and the second film 623 may pass between the first roller 611 and the second roller 613, and due to the predetermined pressure applied, the boundary surface between the first adhesive 651 and the second adhesive 653 and/or the boundary surface between the second adhesive 653 and the third adhesive 655 may be mixed. Accordingly, the physical properties between the boundary surfaces may gradually change.

According to an embodiment, in step 530, the adhesive layer 410-1 may be drawn out with predetermined tensile force. The adhesive layer 410 may contact a portion of a third roller (e.g., the third roller 615 of FIG. 6) and move toward a curing portion (e.g., the curing portion 640 of FIG. 6).

According to an embodiment, in step 540, the curing portion 640 may cure the adhesive layer 410. For this purpose, the curing portion 640 may emit ultraviolet rays to the adhesive layer 410.

According to an embodiment, by irradiating light having a predetermined wavelength to the adhesive layer 410, it may be detected whether the first to third adhesives 651, 653, 655 are disposed in areas partitioned based on the boundary surfaces of the adhesive layer 410. The second adhesive 653, which is a low modulus material among the first to third adhesives 651, 653, 655, may include a fluorescent material that absorbs the predetermined wavelength and emits light. Here, the light source may have, e.g., a wavelength range of 300 to 400nm. However, this is not limited thereto, and the light source may include light sources having wavelength ranges outside the visible light range (e.g., 400nm to 700nm).

According to an embodiment, light having a predetermined wavelength may be radiated to the adhesive layer 410. The fluorescent material included in the second adhesive 653 may absorb the light and emit light. As a result, the area where the second adhesive 653 is provided may emit light due to the light source.

FIG. 6 is a view illustrating a process of manufacturing an adhesive layer from a manufacturing device 600 according to an embodiment.

FIG. 7 is a view illustrating a process of manufacturing an adhesive layer from a manufacturing device 600 according to an embodiment. FIG. 7 may be understood as a plan view looking from above at FIG. 6, which is illustrated as a front view.

Referring to FIGS. 6 and 7, the manufacturing device 600 may include rollers 611, 613, 615, an injection portion 630, and a curing portion 640. The manufacturing device 600 may manufacture an adhesive layer 710 by disposing adhesive 650 between a first film 621 and a second film 623.

According to an embodiment, the rollers 611, 613, 615 may be provided to move the first film 621, second film 623, and adhesive layer 710 at a predetermined speed. The rollers 611, 613, 615 may rotate at a predetermined speed by a motor (not illustrated). The first film 621, second film 623, and adhesive layer 710 in contact with one surface of the rollers 611, 613, 615 may move at a predetermined speed corresponding to the rotation of the rollers 611, 613, 615. The rollers 611, 613, 615 may include a first roller 611, a second roller 613, and a third roller 615.

According to an embodiment, the first roller 611 and the second roller 613 may be separated with a predetermined gap. The predetermined gap may determine the width of the adhesive layer 710.

According to an embodiment, the third roller 615 may move the adhesive layer 710 to pass through the curing portion 640.

According to an embodiment, the injection portion 630 may have a predetermined space for injecting the adhesive 650 formed by the base surface 631 and sidewalls 632, 635. The injection portion 630 may be partitioned into one or multiple areas. In case that the injection portion 630 is partitioned into at least two or more areas, the injection portion 630 may include one or more partitions (e.g., the first partition 633 and second partition 634 of FIG. 6).

According to an embodiment, the injection portion 630 may include a first injection portion 630a formed by the base surface 631, first sidewall 632, and first partition 633. The injection portion 630 may include a second injection portion 630b formed by the base surface 631, first partition 633, and second partition 634. The injection portion 630 may include a third injection portion 630c formed by the base surface 631, second partition 634, and second sidewall 635.

According to an embodiment, the width of the first injection portion 630a may be set as $w_a$, the width of the second injection portion 630b as $w_b$, and the width of the third injection portion 630c as $w_c$. By adjusting the positions of the first and second sidewalls 631, 635 and the first to third partitions 632, 633, 634, the widths $w_a$, $w_b$, $w_c$ of the first to third injection portions 630a to 630c may be changed. The widths $w_a$, $w_b$, $w_c$ of the first to third injection portions 630a to 630c may form the widths of the first to third areas 411-1, 413-1, 415-1 included in the adhesive layer 410-1.

According to an embodiment, the curing portion 640 may emit ultraviolet rays toward the adhesive layer 710.

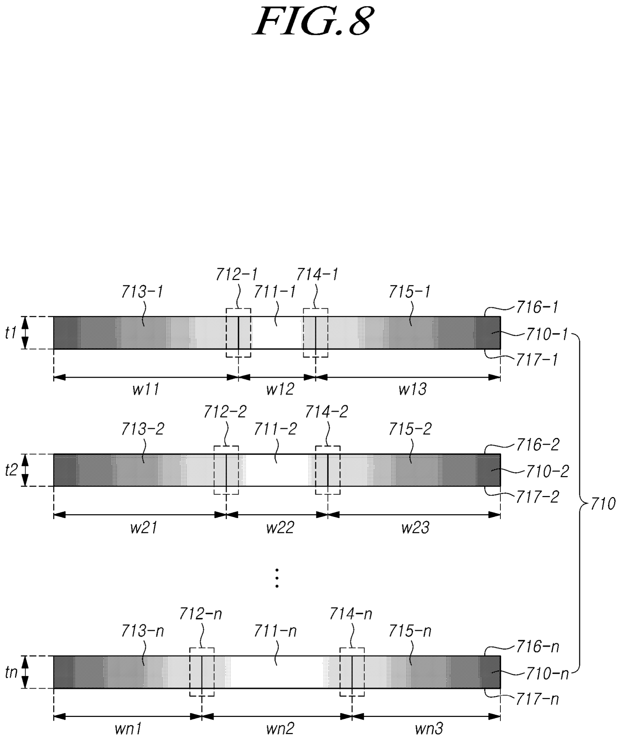

According to an embodiment, the adhesive 650 may be provided between the first film 621 and the second film 623, and may be pressed to a predetermined thickness by the first roller 611 and the second roller 613. The boundary surfaces of the first to third adhesives 651, 653, 655 included in the adhesive 650 may be mixed by the first roller 611 and the second roller 613, whereby the physical properties at the boundary surfaces may gradually change. This is described below in FIG. 8.

According to an embodiment, a plurality of adhesive layers may be manufactured by adjusting the width and thickness of the adhesive layer 710, and the adhesive layer 410 of FIG. 4 may be manufactured by stacking the plurality of adhesive layers. The plurality of adhesive layers may be stacked by a roll laminating method.

FIG. 8 is a cross-sectional view illustrating a plurality of unit adhesive layers 710-1, 710-2, ...710-n constituting the adhesive layer 710 according to an embodiment (e.g., the 1-1th adhesive layer 410-1, 1-2th adhesive layer 410-2, ...1-nth adhesive layer 410-n of FIG. 4). The plurality of unit adhesive layers 710-1, 710-2, ...710-n may be manufactured by the manufacturing process according to FIGS. 5 to 7. The plurality of unit adhesive layers 710-1, 710-2, ...710-n may be stacked by a roll laminating method to form the adhesive layer 710. The adhesive layer 710 may correspond at least partially or entirely to the adhesive layer 410 of FIG. 4.

Referring to FIG. 8, the adhesive layer 710 may include a plurality of unit adhesive layers 710-1, 710-2, ...710-n. The plurality of unit adhesive layers 710-1, 710-2, ...710-n may include a first adhesive layer 710-1 (e.g., the 1-1th adhesive layer 410-1 of FIG. 4), a second adhesive layer 710-2 (e.g., the 1-2th adhesive layer 410-2 of FIG. 4), ...an nth adhesive layer 710-n (e.g., the 1-nth adhesive layer 410-n of FIG. 4). Hereinafter, the description will focus on the first adhesive layer 710-1 included in the first to nth adhesive layers 710-1, 710-2, ...710-n, and the description of the first adhesive layer 710-1 may apply mutatis mutandis to the remaining adhesive layers included in the first to nth adhesive layers 710-1, 710-2, ...710-n.

According to an embodiment, an upper surface 716-1 of the 1-1th adhesive layer 710-1 may be formed by a first film (e.g., the first film 621 of FIG. 6). A lower surface 717-1 of the 1-1th adhesive layer 710-1 may be formed by a second film (e.g., the second film 623 of FIG. 6).

According to an embodiment, the 1-1th adhesive layer 710-1 may include a 1-1th area 711-1, a 1-2th area 713-1, and a 1-3th area 715-1. The 1-1th area 711-1 may be formed by the second adhesive (e.g., the second adhesive 653 of FIG. 7) injected into the second injection portion 630b, the 1-2th area 713-1 may be formed by the first adhesive (e.g., the first adhesive 651 of FIG. 7) injected into the first injection portion 630a, and the 1-3th area 715-1 may be formed by the third adhesive (e.g., the third adhesive 655 of FIG. 7) injected into the third injection portion 630c.

According to an embodiment, the 1-1th area 711-1 may include a fluorescent material (e.g., the fluorescent material of FIG. 5). The fluorescent material may include, e.g., stilbenedisulfonic acid-based, coumarin-based, pyrazoline-based, naphthalimide-based, or bisbenzoxazolyl-based materials. The fluorescent material may absorb light having a specific wavelength range and emit light. The fluorescent material may, e.g., absorb light of 300 to 400nm and emit light.

According to an embodiment, it may be inspected whether adhesives having different moduli are provided based on partitioned boundary surfaces of the adhesive layer 710. For example, in case that light having a predetermined wavelength is radiated to the 1-1th area 711-1, the fluorescent material included in the 1-1th area 711-1 may emit light. Accordingly, it may be inspected that the low modulus material adhesive (e.g., the second adhesive 653 of FIG. 6) is provided in the 1-1th area 711-1.

According to an embodiment, the width w12 of the 1-1th area 711-1 may be substantially the same as the width $w_b$ of the second injection portion 630b. The width w11 of the 1-2th area 713-1 may be substantially the same as the width $w_a$ of the first injection portion 630a. The width w13 of the 1-3th area 715-1 may be substantially the same as the width $w_c$ of the third injection portion 630c.

According to an embodiment, the boundary surface between the 1-1th area 711-1 and the 1-2th area 713-1 and the boundary surface between the 1-2th area 713-1 and the 1-3th area 715-1 may be mixed by the first roller (e.g., the first roller 611 of FIG. 6) and the second roller (e.g., the second roller 613 of FIG. 6). The mixed area near the boundary surface between the 1-1th area 711-1 and the 1-2th area 713-1 may be referred to as a 1-1th mixed area 712-1, and the mixed area near the boundary surface between the 1-2th area 713-1 and the 1-3th area 715-1 may be referred to as a 1-2th mixed area 714-1.

According to an embodiment, the physical properties of the 1-1th mixed area 712-1 may gradually change. For example, the physical properties near the 1-1th area 711-1 in the 1-1th mixed area 712-1 may be substantially the same as the physical properties of the 1-1th area 711-1, and the physical properties near the 1-2th area 713-1 in the 1-1th mixed area 712-1 may be substantially the same as the physical properties of the 1-2th area 713-1. For example, the modulus value of the 1-1th mixed area 712-1 may increase as moving from the 1-1th area 711-1 toward the 1-2th area 713-1. For example, the modulus value at the middle point of the 1-1th mixed area 712-1 may indicate an average value of the modulus value of the 1-1th area 711-1 and the modulus value of the 1-2th area 713-1.

According to an embodiment, the physical properties of the 1-2th mixed area 714-1 may gradually change. For example, the physical properties near the 1-1th area 711-1 in the 1-2th mixed area 714-1 may be substantially the same as the physical properties of the 1-1th area 711-1, and the physical properties near the 1-3th area 715-1 in the 1-2th mixed area 714-1 may be substantially the same as the physical properties of the 1-3th area 715-1. For example, the modulus value of the 1-2th mixed area 714-1 may increase as moving from the 1-1th area 711-1 toward the 1-3th area 715-1. For example, the modulus value at the middle point of the 1-2th mixed area 714-1 may indicate an average value of the modulus value of the 1-1th area 711-1 and the modulus value of the 1-3th area 715-1.

According to an embodiment, due to the formation of the 1-1th mixed area 712-1 and the 1-2th mixed area 714-1, the physical properties between areas constituting the adhesive layer 710 may gradually change. Therefore, due to the gradual change in thickness, refractive index, and/or transmittance at the boundary surfaces of the adhesive layer 710, visual perception of the boundary surfaces may be minimized.

According to an embodiment, the first to nth adhesive layers 710-1, 710-2, ...710-n may be stacked in order. For example, the adhesive layer 710 may be disposed such that the first to nth adhesive layers 710-1, 710-2, ..., 710-n are stacked sequentially from top. The first to nth adhesive layers 710-1, 710-2, ...710-n may be stacked by a roll laminating method.

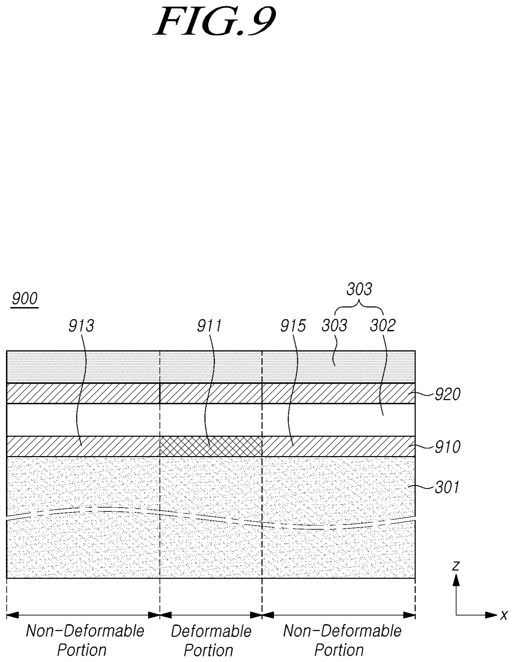

FIG. 9 is a cross-sectional view illustrating a display 900 (e.g., the display 300 of FIG. 3) according to an embodiment.

FIG. 10 is a cross-sectional view illustrating a display 900 (e.g., the display 300 of FIG. 3) according to an embodiment.

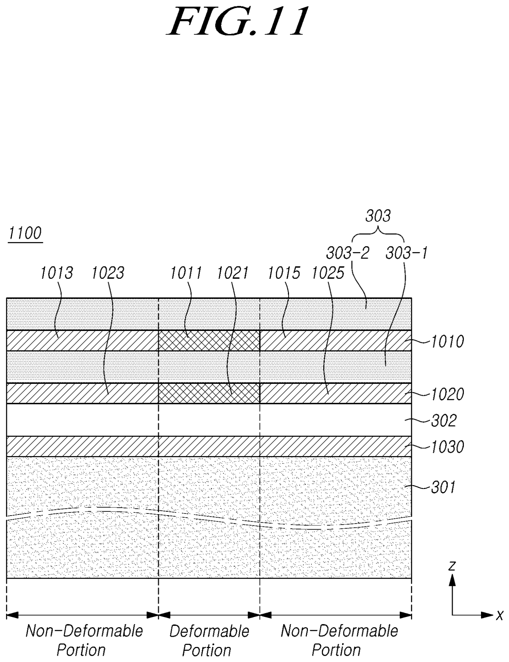

FIG. 11 is a cross-sectional view illustrating a display 900 (e.g., the display 300 of FIG. 3) according to an embodiment.

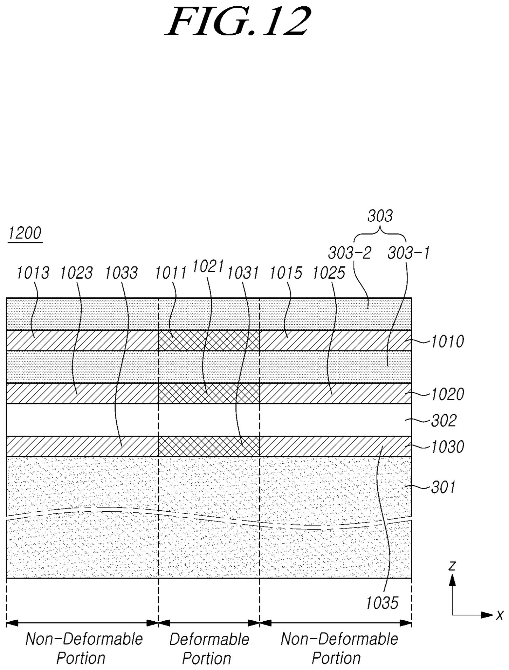

FIG. 12 is a cross-sectional view illustrating a display 900 (e.g., the display 300 of FIG. 3) according to an embodiment.

The adhesive layers 910, 1010, 1110, 1120, 1130 illustrated in FIGS. 9 to 12 (e.g., the adhesive layer 410 of FIG. 4 or the adhesive layer 710 of FIG. 8) may be understood as illustrating possible embodiments corresponding to various arrangement structures in the display stacked structure. In other words, the adhesive layers 910, 1010, 1110, 1120, 1130 may be selectively and/or redundantly applied to adhesive layers provided in the display stacked structure. Therefore, at least some configurations may correspond, and redundant descriptions are omitted while focusing on differences.

Referring to FIG. 9, the display 900 may include a display panel 301, a glass layer 302, and a protective layer 303. Adhesive layers 910, 920 may be provided between layers for the layers included in the display 900 to form a stacked structure. The adhesive layers 910, 920 may include a first adhesive layer 910 and a second adhesive layer 920. The first adhesive layer 910 may correspond to the second adhesive layer 320 of FIG. 3A, and the second adhesive layer 920 may correspond to the first adhesive layer 310 of FIG. 3A.

According to an embodiment, the first adhesive layer 910 may be disposed between the display panel 301 and the glass layer 302 to bond the display panel 301 and the glass layer 302. The second adhesive layer 920 may be disposed between the glass layer 302 and the protective layer 303 to bond the glass layer 302 and the protective layer 303.

According to an embodiment, the first adhesive layer 910 may include a first area 911 composed of low modulus material and second and third areas 913, 915 composed of high modulus material. The first area 911 may be provided corresponding to the deformable portion, which is an area where the shape of the display 900 deforms, and the second and third areas 913, 915 may be provided corresponding to the non-deformable portion, which is an area where the shape of the display 900 does not deform.

According to an embodiment, the first adhesive layer 910 may be implemented as one layer or as multiple layers. For example, in case that the first adhesive layer 910 is implemented as multiple layers, the first adhesive layer 910 may correspond to the first adhesive layer 310 of FIG. 4. In case of being implemented as multiple layers, the width of the first area 911 included in the first adhesive layer 910 may widen corresponding to the thickness direction proceeding from the protective layer 303 to the display panel 302. Due to the increased proportion of high modulus areas at the outermost portion of the display 900, high durability against external impacts may be provided.

According to an embodiment, mixed areas of high modulus material and low modulus material may be present at the boundary surfaces between the first to third areas 913, 915 included in the first adhesive layer 910. Further, the physical properties (e.g., transmittance and/or refractive index) at the boundary surfaces between the first to third areas 911, 913, 915 may gradually change. In this case, the first adhesive layer 910 may correspond to the adhesive layer 710 of FIG. 8. This may minimize visual perception of the boundary surfaces.

Referring to FIGS. 10 to 12, the displays 1000, 1100, 1200 may include a display panel 301, a glass layer 302, and a protective layer 303. The protective layer 303 may include a first protective layer 303-1 and a second protective layer 303-2. The first protective layer 303-1 and the second protective layer 303-2 may be composed of the same material (e.g., polymer). The first protective layer 303-1 and the second protective layer 303-2 may have different hardnesses. In other words, the first protective layer 303-1 may be implemented as a high hardness protective layer, and the second protective layer 303-2 may be implemented as a low hardness protective layer.

According to an embodiment, the adhesive layers 1010, 1020, 1030 may include a first adhesive layer 1010, a second adhesive layer 1020, and a third adhesive layer 1030. The first adhesive layer 1010 may be provided between the first protective layer 303-1 and the second protective layer 303-2 to bond the first protective layer 303-1 and the second protective layer 303-2. The second adhesive layer 1020 may be provided between the second protective layer 303-2 and the glass layer 302 to bond the second protective layer 303-2 and the glass layer 302. The third adhesive layer 1030 may be provided between the glass layer 302 and the display panel 301 to bond the glass layer 302 and the display panel 301.

According to an embodiment, at least one of the first to third adhesive layers 1010, 1020, 1030 may be implemented as an adhesive layer composed of high modulus material areas and low modulus material areas. In FIG. 10, the first adhesive layer 1010 may be composed of high modulus material areas and low modulus material areas. In FIG. 11, the first adhesive layer 1010 and the second adhesive layer 1020 may be composed of high modulus material areas and low modulus material areas. In FIG. 12, the first to third adhesive layers 1010, 1020, 1030 may be composed of high modulus material areas and low modulus material areas. Hereinafter, for adhesive layers composed of high modulus material areas and low modulus material areas among the first to third adhesive layers 1010, 1020, 1030, the content described for the first adhesive layer 1010 below may apply mutatis mutandis.

According to an embodiment, the first adhesive layer 1010 may include a first area 1011 composed of low modulus material and second and third areas 1013, 1015 composed of high modulus material. The first area 1011 may be provided corresponding to the deformable portion, which is an area where the shape of the display 1000 deforms, and the second and third areas 1013, 1015 may be provided corresponding to the non-deformable portion, which is an area where the shape of the display 1000 does not deform.

According to an embodiment, the first adhesive layer 1010 may be implemented as one layer or as multiple layers. For example, in case that the first adhesive layer 1010 is implemented as multiple layers, the first adhesive layer 1010 may correspond to the first adhesive layer 410 of FIG. 4. In case of being implemented as multiple layers, the width of the first area 1011 included in the first adhesive layer 1010 may widen corresponding to the thickness direction proceeding from the protective layer 303 to the display panel 302. Due to the increased proportion of high modulus areas at the outermost portion of the display 1000, high durability against external impacts may be provided.

According to an embodiment, mixed areas of high modulus material and low modulus material may be present at the boundary surfaces between the first to third areas 1013, 915 included in the first adhesive layer 1010. Further, the physical properties (e.g., transmittance and/or refractive index) at the boundary surfaces between the first to third areas 1011, 1013, 1015 may gradually change. In this case, the first adhesive layer 1010 may correspond to the adhesive layer 710 of FIG. 8.

Without being limited to what is illustrated, the adhesive layers mentioned in the disclosure (e.g., the first adhesive layer 310 of FIG. 3A, the adhesive layer 410 of FIG. 4, the adhesive layer 710 of FIG. 8, and the first adhesive layer 1010 of FIGS. 10 to 12) may be applied in various cases where adhesive layers provided in display stacked structures are composed of high modulus material and low modulus material areas.

FIG. 13 is a view illustrating a unfolded state of an electronic device 1201 (e.g., the electronic device 101 of FIG. 1) according to an embodiment.

FIG. 14 is an exploded perspective view illustrating the electronic device 1201 according to an embodiment.

Referring to FIG. 13, an electronic device 1201 according to various embodiments may include a foldable housing 1300a and a flexible or foldable display 1300 (hereinafter referred to simply as "display" 1300) (e.g., the display device 160 of FIG. 1) disposed within a space formed by the foldable housing 1300a.

According to various embodiments, the surface on which the display 1300 is disposed may be defined as a front surface of the electronic device 1201. At least a portion of the front surface of the electronic device 1201 may be formed of a substantially transparent front plate (e.g., a glass plate or polymer plate including various coat layers). The opposite surface of the front surface may be defined as a rear surface of the electronic device 1201. The rear surface of the electronic device 1201 may be formed by a substantially opaque rear plate (hereinafter, referred to as a 'back cover'). The back cover may be formed of, e.g., laminated or colored glass, ceramic, polymer, metal (e.g., aluminum, stainless steel (STS), or magnesium), or a combination of at least two thereof. The surface surrounding the space between the front and back surfaces may be defined as a side surface of the electronic device 1201. The side surface may be formed by a side bezel structure (or a "side member") that couples to the front plate and the rear plate and includes a metal and/or polymer. According to an embodiment, the back cover and the side bezel plate may be integrally formed together and include the same material (e.g., a metal, such as aluminum).

According to various embodiments, the electronic device 1201 may include at least one or more of a display 1300, audio modules 1304, 1305, and 1306, a sensor module 1309, camera modules 1307 and 1308, key input devices 1311, 1312, and 1313, and a connector hole 1314.

According to various embodiments, the display 1300 may be a display at least a portion of which may be transformed into a flat or curved surface. According to an embodiment, the display 1300 may include a folding area 1303, a first area 1301 disposed on one side of the folding area 1303 (e.g., the upper side of the folding area 1303 of FIG. 13), and a second area 1302 disposed on the opposite side of the folding area 1303 (e.g., the lower side of the folding area 1303 of FIG. 13). However, the segmentation of the display 1300 as illustrated in FIG. 13A is merely an example, and the display 1300 may be divided into a plurality of (e.g., four or more, or two) areas depending on the structure or function of the display 1300. For example, in the embodiment illustrated in FIG. 13, the display 1300 may be divided into the areas by the folding area 1303 or folding axis A-A' but, in another embodiment, the display 1300 may be divided into the areas with respect to another folding area or another folding axis (e.g., a folding axis perpendicular to the folding axis A-A').

According to various embodiments, the electronic device 1201 may transform into a folded status or an unfolded status. The electronic device 1201 may be folded in two types, e.g., 'in-folding' in which it is folded so that the front surface of the electronic device 1201 forms an acute angle and 'out-folding' in which it is folded so that the front surface of the electronic device 1201 forms an obtuse angle, as viewed in the direction of the folding axis (e.g., A-A' of FIG. 13). For example, in the in-folded state of the electronic device 1201, the first surface 1310a may face the third surface 1320a and, in the fully unfolded state, the third direction may be identical to the first direction. As another example, in the out-folded state of the electronic device 1201, the second surface 1310b may face the fourth surface 1320b.

The in-folding type may mean a state in which the display 1300 is not exposed to the outside in the fully folded state. The out-folding type may mean a state in which the display 1300 is exposed to the outside in the fully folded state. Although an in-folding type electronic device 1201 is primarily described below for convenience purposes, it should be noted that the descriptions may also apply to an out-folding type electronic device 1201.

According to various embodiments, the audio modules 1304, 1305, and 1306 may include a microphone hole 1304 and speaker holes 1305 and 1306. The microphone hole 1304 may have a microphone disposed therein to obtain external sound, and in some embodiments, multiple microphones may be disposed to detect the direction of sound. The speaker holes 1305 and 1306 may include an external speaker hole 1305 and a phone receiver hole 1306. According to an embodiment, the speaker holes 1305 and 1306 and the microphone hole 1304 may be implemented as a single hole, or speakers may be included without the speaker holes 1305 and 1306 (e.g., piezo speakers). Various changes may be made to the position and number of microphone holes 1304 and speaker holes 1305 and 1306 according to an embodiment.

According to various embodiments, the camera modules 1307 and 1308 may include a first camera device 1307 disposed on the first surface 1310a of the first housing 1410 of the electronic device 1201 and a second camera device 1308 disposed on the second surface 1310b. The electronic device 1201 may further include a flash (not shown). The camera devices 1307 and 1308 may include one or more lenses, an image sensor, and/or an image signal processor. The flash (not shown) may include, e.g., a light emitting diode or a xenon lamp.

According to various embodiments, the sensor modules 1309 may generate an electrical signal or data value corresponding to an internal operating state or external environmental state of the electronic device 1201. Although not shown in the drawings, the electronic device 1201 may additionally or alternatively include a sensor module other than the sensor module 1309 provided on the second surface 1310b of the first housing 1410. The electronic device 1201 may include, as the sensor module, at least one of a proximity sensor, a fingerprint sensor, an HRM sensor, a gesture sensor, a gyro sensor, an atmospheric pressure sensor, a magnetic sensor, an acceleration sensor, a grip sensor, a color sensor, an infrared (IR) sensor, a biometric sensor, a temperature sensor, a humidity sensor, or an illuminance sensor.

According to various embodiments, the key input devices 1311, 1312, and 1313 may be disposed on a side surface of the foldable housing 1300a. According to another embodiment, the electronic device 1201 may exclude all or some of the above-mentioned key input devices 1311, 1312, and 1313 and the excluded key input devices may be implemented in other forms, e.g., as soft keys, on the display 1300. In some embodiments, the key input device may be configured to implement key input by a sensor module.

According to various embodiments, the connector hole 1314 may be configured to receive a connector (e.g., a USB connector) for transmitting/receiving power and/or data to/from an external electronic device or, additionally or alternatively, a connector for transmitting/receiving audio signals to/from an external electronic device.

According to various embodiments, the foldable housing 1300a may include a first housing structure 1310, a second housing structure 1320, a first rear cover 1380, a second rear cover 1390, and a hinge structure. (e.g., the hinge structure 1440 of FIG. 14). The foldable housing 1300a of the electronic device 1201 are not limited to the shape and coupling shown in FIG. 13A but may rather be implemented in other shapes or via a combination and/or coupling of other components. For example, the first housing structure 1310 and the first rear cover 1380 may be integrally formed with each other, and the second housing structure 1320 and the second rear cover 1390 may be integrally formed with each other. According to various embodiments of the disclosure, 'housing structure' may be a component obtained by combining and/or coupling various components, including the housing.

According to various embodiments, the first housing structure 1310 may be connected to the hinge structure (e.g., the hinge structure 1440 of FIG. 14 described below) and may include a first surface 1310a facing in a first direction and a second surface 1310b facing in a second direction opposite to the first direction. The second housing 1320 may be connected to the hinge structure (e.g., the hinge structure 1440 of FIG. 14) and may include a third surface 1320a facing in a third direction and a fourth surface 1320b facing in a fourth direction opposite to the third direction and may be rotated from the first housing 1310 about the hinge structure (or folding axis A-A').

According to various embodiments, the first housing structure 1310 and the second housing structure 1320 may be disposed on both sides (or upper/lower sides) of the folding axis A-A', and may have an overall symmetrical shape with respect to the folding axis A-A'. The angle or distance between the first housing structure 1310 and the second housing structure 1320 may be varied depending on whether the electronic device 1201 is in the unfolded state, the folded state, or the partially unfolded (or partially folded) intermediate state. According to an embodiment, the first housing structure 1310 may further include various sensors unlike the second housing structure 1320 but, in the remaining area, the first housing 1310 and the second housing 1320 may have symmetrical shapes with each other.

According to various embodiments, at least a portion of the first housing structure 1310 and the second housing structure 1320 may be formed of a metal or a non-metal material having a predetermined degree of rigidity to support the display 1300. At least a portion formed of metal may provide a ground plane of the electronic device 1201 and may be electrically connected with a ground line formed on a printed circuit board (e.g., the printed circuit board 1430 of FIG. 14).

According to various embodiments, the first rear cover 1380 may be disposed on one side of the folding axis A-A' on the rear surface of the electronic device 1201 and have, e.g., a substantially rectangular periphery which may be surrounded by the first housing structure 1310. Similarly, the second rear cover 1390 may be disposed on the opposite side of the folding axis A-A' on the rear surface of the electronic device 1201 and its periphery may be surrounded by the second housing structure 1320.

According to various embodiments, the first rear cover 1380 and the second rear cover 1390 may be substantially symmetrical in shape with respect to the folding axis A-A'. However, the first rear cover 1380 and the second rear cover 1390 are not necessarily symmetrical in shape. In another embodiment, the electronic device 1201 may include the first rear cover 1380 and the second rear cover 1390 in various shapes. According to another embodiment, the first rear cover 1380 may be integrally formed with the first housing structure 1310, and the second rear cover 1390 may be integrally formed with the second housing structure 1320.

According to various embodiments, the first rear cover 1380, the second rear cover 1390, the first housing structure 1310, and the second housing structure 1320 may form a space where various components (e.g., a printed circuit board or battery) of the electronic device 1201 may be disposed. According to an embodiment, one or more components may be arranged or visually exposed on/through the rear surface of the electronic device 1201. For example, at least a portion of a sub display 1300-1 may be visually exposed through the first rear cover 1380. In another embodiment, one or more components or sensors may be visually exposed through the first back cover 1380. According to various embodiments, the sensor may include a proximity sensor and/or a rear-facing camera. Although not separately shown in the drawings, one or more other components or sensors may be visually exposed through the second rear cover 1390.

According to various embodiments, the front camera 1307 exposed from the front surface of the electronic device 1201 through one or more openings or the rear camera 1308 exposed through the first rear cover 1380 may include one or more lenses, an image sensor, and/or an image signal processor. The flash 1309 may include, e.g., a light emitting diode or a xenon lamp. According to an embodiment, thirteen or more lenses (an infrared (IR) camera, a wide-angle lens, and a telephoto lens) and image sensors may be disposed on one surface of the electronic device 1201.

Referring to FIG. 14, according to various embodiments, an electronic device 1201 may include a display 1410 (e.g., the display 1300 of FIG. 13A), a foldable housing 1420 (e.g., the foldable housing 1300a of FIG. 13A), a printed circuit board 1430, a hinge structure 1440, a flexible connection member 1450, a hinge cover 1460, an antenna structure 1470, and a rear cover 1480. Hereinafter, detailed descriptions of the components overlapping those of FIG. 13 (e.g., the display 1410, the foldable housing 1420, and the rear cover 1480) will be omitted.

According to various embodiments, the display 1410 may be exposed through a majority portion of the front plate 1411. According to an embodiment, the shape of the display 1410 may be formed to be substantially the same as the shape of the periphery of the front plate 1411.

According to various embodiments, the foldable housing 1420 may include a first housing 1421 and a second housing 1422. According to an embodiment, the first housing 1421 may include a first surface 1421a and a second surface 1421b facing in a direction opposite to the first surface 1421a. The second housing 1422 may include a third surface 1422a and a fourth surface 1422b facing in a direction opposite to the third surface 1422a. The foldable housing 1420 may additionally or alternatively include a bracket assembly. The bracket assembly may include a first bracket assembly 1423 disposed in the first housing 1421 and a second bracket assembly 1424 disposed in the second housing 1422. At least part of the bracket assemblies, e.g., a portion 1425 including at least part of the first bracket assembly 1423 and at least part of the second bracket assembly 1424, may serve as a plate for supporting the housing structure 1440.

According to various embodiments, various electric components may be disposed on the printed circuit board 1430. For example, a processor (e.g., the processor 120 of FIG. 1), a memory (e.g., the memory 130 of FIG. 1), and/or an interface (e.g., the interface 177 of FIG. 1) may be mounted on the printed circuit board 1430. The processor may include one or more of, e.g., a central processing unit, an application processor, a graphic processing device, an image signal processing, a sensor hub processor, or a communication processor. The memory may include, e.g., a volatile or non-volatile memory. The interface may include, e.g., a high definition multimedia interface (HDMI), a universal serial bus (USB) interface, a secure digital (SD) card interface, and/or an audio interface. The interface may electrically or physically connect, e.g., the electronic device 1201 with an external electronic device and may include a USB connector, an SD card/multimedia card (MMC) connector, or an audio connector.

According to various embodiments, the printed circuit board 1430 may include a first printed circuit board 1431 disposed on the side of the first bracket assembly 1423 and a second printed circuit board 1432 disposed on the side of the second bracket assembly 1424. The first printed circuit board 1431 and the second printed circuit board 1432 may be disposed inside the space formed by the foldable housing 1420, bracket assemblies, first rear cover 1481 and/or second rear cover 1482. Components for implementing various functions of the electronic device 1201 may be separately disposed on the first printed circuit board 1431 and the second printed circuit board 1432. For example, a processor may be disposed on the first printed circuit board 1431, and an audio interface may be disposed on the second printed circuit board 1432.

According to various embodiments, a battery may be disposed adjacent to the printed circuit board 1430 to supply power to the electronic device 1201. At least a portion of the battery may be disposed on substantially the same plane as the printed circuit board 1430. According to an embodiment, a first battery 1433 may be disposed adjacent to the first printed circuit board 1431, and a second battery 1434 may be disposed adjacent to the second printed circuit board 1432. The battery may be a device for supplying power to at least one component of the electronic device 1201. The battery 189 may include, e.g., a primary cell which is not rechargeable, a secondary cell which is rechargeable, or a fuel cell. The battery may be integrally or detachably disposed inside the electronic device 1201. According to various embodiments, the hinge structure 1440 may be a component for supporting the foldable housing 1420 and/or bracket assembly to allow the foldable housing to rotate about the folding axis (e.g., A-A' of FIG. 13). The hinge structure 1440 may include a first hinge structure 1441 disposed on the side of the first printed circuit board 1431 and a second hinge structure 1442 disposed on the side of the second printed circuit board 1432. The hinge structure 1440 may be disposed between the first printed circuit board 1431 and the second printed circuit board 1432. According to an embodiment, the hinge structure 1440 may be formed substantially integrally with the portion 1425 including at least a portion of the first bracket assembly 1423 and at least a portion of the second bracket assembly 1424.

According to various embodiments, a 'housing structure' may include the foldable housing 1420 and may be one resultant from assembling and/or combining at least one component disposed in the housing 1420. The housing structure may include a first housing structure and a second housing structure. For example, a component assembled to include the first housing 1421 and further include at least one component among the first bracket assembly 1423, the first printed circuit board 1431, and the first battery 1433 disposed inside the first housing 1421 may be referred to as the 'first housing structure.' As another example, a component assembled to include the second housing 1422 and further include at least one component among the second bracket assembly 1424, the second printed circuit board 1432, and the second battery 1434 disposed inside the second housing 1422 may be referred to as the 'second housing structure.' However, it should be noted that the 'first housing structure and the second housing structure' are not limited to the addition of the above-described components, but may add or omit various other components.

According to various embodiments, the flexible connection member 1450 may be, e.g., a flexible printed circuit board (FPCB) and electrically connect various electrical elements disposed on the first printed circuit board 1431 and the second printed circuit board 1432. To this end, the flexible connecting member 1450 may be disposed to cross the 'first housing structure' and the 'second housing structure'. According to an embodiment, the flexible connection member 1450 may be formed to at least partially hang over the hinge structure 1440. According to an embodiment, the flexible connection member 1450 may be configured to connect the hinge structure 1440 to the first printed circuit board 1431 and the second printed circuit board 1432. As another example, the flexible connection member 1450 may be fitted into the openings 1441h and 1442h formed in the hinge structure 1440. In this case, a portion 1450a of the flexible connection member 1450 may be disposed over one side (e.g., upper portion) of the first hinge structure 1441, and another portion 1450b of the flexible connection member 1450 may be disposed over one side (e.g., upper portion) of the second hinge structure 1442. Another portion 1450c of the flexible connection member 1450 may be disposed on the other side (e.g., lower portion) of the first hinge structure 1441 and the second hinge structure 1442. A space (hereinafter, referred to as a 'hinge space') surrounded by at least a portion of the first hinge structure 1441, at least a portion of the second hinge structure 1442, and at least a portion of the hinge cover 1460 may be formed in a position adjacent to the first hinge structure 1441 and the second hinge structure 1442. According to an embodiment, at least a portion 1450c of the flexible connection member 1450 may be disposed in the hinge space.

According to various embodiments, the hinge cover 1460 may be a component that covers at least a portion of the hinge space. The hinge cover 1460, together with the hinge structure 1440, may close the hinge space and protect a component (e.g., at least a portion 1450c of the flexible connection member 1450) disposed in the hinge space from external impact. According to an embodiment, the hinge cover 1460 may be disposed between the first housing 1421 and the second housing 1422. According to an embodiment, the hinge cover 1460 may be coupled to each of at least one portion of the first housing and at least one portion of the second housing.

According to various embodiments, the antenna structure 1470 (e.g., the antenna module 197 of FIG. 1) may be disposed between the rear cover 1480 and the battery. The antenna structure 1470 may include a plurality of antenna modules in one electronic device 1201. For example, the antenna structure 1470 may include a first antenna module 1471 disposed on the side of the first housing 1421 and a second antenna module 1472 disposed on the side of the second housing 1422. The antenna module may include at least one radiator. Further, the antenna structure 1470 may include, e.g., a near-field communication (NFC) antenna, a wireless charging antenna, and/or a magnetic secure transmission (MST) antenna. The antenna structure 1470 may perform short-range communication with, e.g., an external device or may wirelessly transmit or receive power necessary for charging. According to another embodiment, an antenna structure may be formed by a portion or combination of the side bezel structure of the foldable housing 1420 and/or bracket assembly.

According to various embodiments, the rear cover 1480 may include a first rear cover 1481 and a second rear cover 1482. The rear cover 1480 may be combined with the foldable housing 1420 to protect the above-described components (e.g., the printed circuit board 1430, the battery, the flexible connection member 1450, and the antenna structure 1470) disposed in the foldable housing 1420. As described above, the rear cover 1480 may be configured substantially integrally with the foldable housing 1420.

According to an embodiment, the display 1300 may correspond to the display 300, 400 of FIG. 3A or 4. The first area 1301 and second area 1302 of the display 1300 may correspond to the non-deformable portion, and the third area 1303 of the display 1300 may correspond to the deformable portion.

According to an embodiment, for the display 1300 to be implemented with a stacked structure, it may include an adhesive layer (e.g., the adhesive layer 910 of FIG. 9). The adhesive layer 910 may include the first area 911 of low modulus material and the second and third areas 913, 915 of high modulus material corresponding to the deformable portion and non-deformable portion.

According to an embodiment, the adhesive layer 910 may be implemented as one layer or as multiple layers. For example, in case that the adhesive layer 910 is implemented as multiple layers, the width of the first area 911 included in the adhesive layer 910 may widen corresponding to the lower surface direction of the display 1300 (e.g., the thickness direction proceeding from the protective layer 303 to the display panel 302 in FIG. 9). Due to the increased proportion of high modulus areas at the outermost portion of the display 900, high durability against external impacts may be provided.

According to an embodiment, mixed areas of high modulus material and low modulus material (e.g., the 1-1th mixed area 712-1 or 1-2th mixed area 714-1 of FIG. 8) may be present near the boundary surfaces between the high modulus material and low modulus material included in the adhesive layer 910. Further, the physical properties (e.g., transmittance and/or refractive index) at the boundary surfaces between the first to third areas 911, 913, 915 may gradually change. In this case, the first adhesive layer 910 may correspond to the adhesive layer 710 of FIG. 8. This may minimize visual perception of the boundary surfaces.

FIG. 15 is an example view illustrating an unfolded state of an electronic device 1500 (e.g., the electronic device 101 of FIG. 1) according to an embodiment.

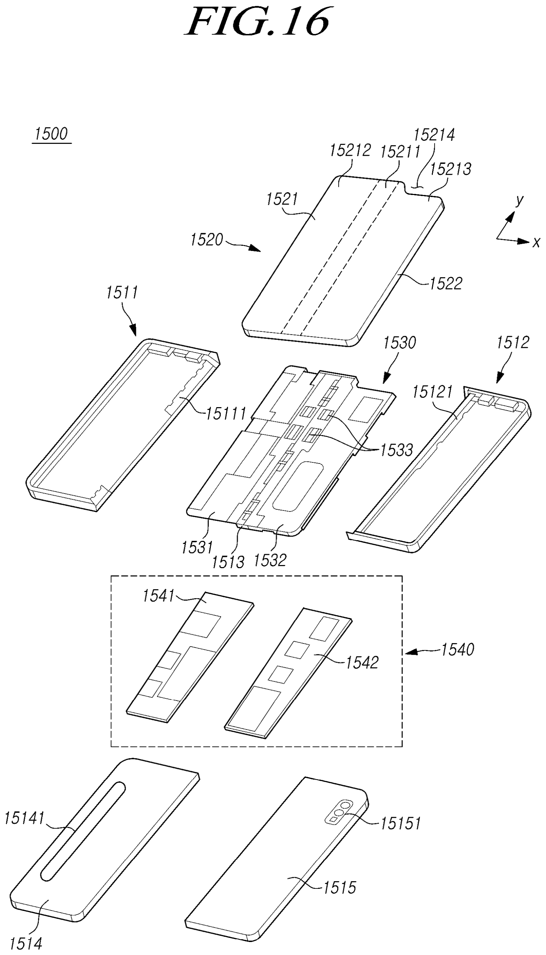

FIG. 16 is an exploded perspective view illustrating an electronic device 1500 according to an embodiment.

Referring to FIGS. 15 and 16, according to an embodiment, an electronic device 1500 may include a foldable housing 1510, a hinge cover 1513 covering a foldable portion of the foldable housing 1510, and a flexible or foldable display 1521 disposed in a space formed by the foldable housing 1510. In the disclosure, a surface where the display 1521 is disposed is defined as a first surface or a front surface of the electronic device 1500. The opposite surface of the front surface is defined as a second surface or a back surface of the electronic device 1500. The surface surrounding the space between the front and back surfaces is defined as a third surface or a side surface of the electronic device 1500.

According to an embodiment, the foldable housing 1510 may include a first housing structure 1511, a second housing structure 1512 including a sensor area 15122, a first back cover 1514, and a second back cover 1515. The foldable housing 1510 of the electronic device 1500 are not limited to the shape and coupling shown in FIGS. 15 and 9B but may rather be implemented in other shapes or via a combination and/or coupling of other components. For example, in another embodiment, the first housing structure 1511 and the first back cover 1514 may be integrally formed with each other, and the second housing structure 1512 and the second back cover 1515 may be integrally formed with each other.

In an embodiment, the first housing structure 1511 and the second housing structure 1512 may be positioned on opposite sides of a folding axis (axis A), and they may be overall symmetrical in shape with each other with respect to the folding axis A. As set forth below, the first housing structure 1511 and the second housing structure 1512 may have different angles or distances formed therebetween depending on whether the electronic device 1500 is in an unfolded, folded, or intermediate state. In an embodiment, the first housing structure 1511 and the second housing structure 1512 may be symmetrical in shape except that the second housing structure 520 further includes the sensor area 15122 where various sensors are arranged, unlike the first housing structure 510. In another embodiment, the sensor area 15122 may additionally be disposed in, or replaced by, at least a partial area of the first housing structure 1511 or the second housing structure 1512.

In an embodiment, the electronic device 1500 may operate in an in-folding manner and/or an out-folding manner by rotating the first housing structure 1510 with respect to the second housing structure 1520 in a range of 0 degrees to 360 degrees through a hinge structure (not illustrated). According to various embodiments, the hinge structure may be formed in a vertical direction or a horizontal direction in case that the electronic device 1500 is viewed from above. According to various embodiments, there may be a plurality of hinge structures. For example, the plurality of hinge structures may all be arranged in the same direction. As another example, some hinge structures among the plurality of hinge structures may be arranged and folded in different directions.

According to an embodiment, as illustrated in FIG. 15, the first housing structure 1511 and the second housing structure 1512 together may form a recess to receive the display 1521. In an embodiment, due to the sensor area 15122, the recess may have two or more different widths in the direction perpendicular to the folding axis A.

For example, the recess may have a first width W1 between a first portion 1511a parallel to the folding axis A of the first housing structure 1511 and a first portion 1512a formed at an edge of the sensor area 15122 of the second housing structure 1512 and a second width W2 formed by a second portion 1511b of the first housing structure 1511 and a second portion 1512b parallel to the folding axis A and not corresponding to the sensor area 15122 of the second housing structure 1512. In this case, the second width W2 may be longer than the first width W1. In other words, the first portion 1511a of the first housing structure 1511 and the first portion 1512a of the second housing structure 1512, asymmetric in shape with each other, may form the first width W1 of the recess, and the second portion 1511b of the first housing structure 1511 and the second portion 1512b of the second housing structure 1512, symmetric in shape with each other, may form the second width W2 of the recess. In an embodiment, the first portion 1512a and second portion 1512b of the second housing structure 1512 may differ in distance from the folding axis A. The width of the recess is not limited thereto. According to various embodiments, the recess may have a plurality of widths due to the shape of the sensor area 15122 or the asymmetric portions of the first housing structure 1511 and the second housing structure 1512.

In an embodiment, the first housing structure 1511 and the second housing structure 1512 may at least partially be formed of a metal or non-metallic material with a rigidity selected to support the display 1521.

In an embodiment, the sensor area 15122 may be formed adjacent to a corner of the second housing structure 1512 and to have a predetermined area. However, the placement, shape, or size of the sensor area 15122 is not limited to those illustrated. For example, in another embodiment, the sensor area 15122 may be provided in a different corner of the second housing structure 1512 or in any area between the top corner and the bottom corner. In an embodiment, components for performing various functions, embedded in the electronic device 1500, may be exposed through the sensor area 15122 or one or more openings in the sensor area 15122 to the front surface of the electronic device 1500. In various embodiments, the components may include various kinds of sensors. The sensors may include at least one of, e.g., a proximity sensor, an illuminance sensor, an iris recognition sensor, an ultrasonic sensor, and an indicator.

In an embodiment, the first back cover 1514 may be disposed on one side of the folding axis on the back surface of the electronic device and have a substantially rectangular periphery which may be surrounded by the first housing structure 1511. Similarly, the second back cover 1515 may be disposed on the opposite side of the folding axis on the back surface of the electronic device and its periphery may be surrounded by the second housing structure 1512.

In an embodiment, the first rear cover 1514 and the second rear cover 1515 may be substantially symmetrical in shape with respect to the folding axis A. However, the first rear cover 1514 and the second rear cover 1515 are not necessarily symmetrical in shape. In another embodiment, the electronic device 1500 may include the first rear cover 1514 and the second rear cover 1515 in various shapes. In another embodiment, the first rear cover 1514 may be integrally formed with the first housing structure 1511, and the second rear cover 1515 may be integrally formed with the second housing structure 1512.

In an embodiment, a combined structure of the first back cover 1514, the second back cover 1515, the first housing structure 1511, and the second housing structure 1512 may form a space where various components (e.g., a printed circuit board or battery) of the electronic device 1500 may be disposed. According to an embodiment, one or more components may be arranged or visually exposed on/through the rear surface of the electronic device 1500. For example, at least a portion of a sub display 15215 may be visually exposed through a first back surface area 15141 of the first back cover 1514. In another embodiment, one or more components or sensors may be visually exposed through a second back surface area 15151 of the second back cover 1515. According to various embodiments, the sensor may include a proximity sensor and/or a rear-facing camera.

Referring to FIG. 9B, the hinge cover 1513 may be disposed between the first housing structure 1511 and the second housing structure 1512 to hide the internal components (e.g., the hinge structure). According to an embodiment, the hinge cover 1513 may be hidden by a portion of the first housing structure 1511 and second housing structure 1512 or be exposed to the outside depending on the state (e.g., the unfolded state or folded state) of the electronic device 1500.

For example, as illustrated in FIG. 15, in the unfolded state of the electronic device 1500, the hinge cover 1513 may be hidden, and thus not exposed, by the first housing structure 1511 and the second housing structure 1512. By way of example, as illustrated in FIG. 9B, in the folded state (e.g., the fully folded state) of the electronic device 1500, the hinge cover 1513 may be exposed to the outside between the first housing structure 1511 and the second housing structure 1512. As an example, in an intermediate state in which the first housing structure 1511 and the second housing structure 1512 are folded with a certain angle, the hinge cover 1513 may be partially exposed to the outside between the first housing structure 1511 and the second housing structure 1512. However, in this case, the exposed area may be smaller than that in the completely folded state. In an embodiment, the hinge cover 1513 may include a curved surface.

The display 1521 may be disposed on a space formed by the foldable housing 1510. For example, the display 1521 may be seated on a recess formed by the foldable housing 1510 and may occupy most of the front surface of the electronic device 1500.

Thus, the front surface of the electronic device 1500 may include the display 1521 and a partial area of the first housing structure 1511 and a partial area of the second housing structure 1512, which are adjacent to the display 1521. The back surface of the electronic device 1500 may include the first back cover 1514, a partial area of the first housing structure 1511, which is adjacent to the first back cover 1514, the second back cover 1515, and a partial area of the second housing structure 1512, which is adjacent to the second back cover 1515.

The display 1521 may mean a display at least a portion of which may be transformed to be flat or curved. According to an embodiment, the display 1521 may include a folding area 15211, a first area 15212 disposed on one side of the folding portion 15211 (e.g., the left side of the folding portion 15211 of FIG. 15), and a second area 15213 disposed on the opposite side of the folding portion 15211 (e.g., the right side of the folding portion 103 of FIG. 15).

The segmentation of the display 1521 as illustrated in FIG. 15 is merely an example, and the display 1521 may be divided into a plurality of (e.g., four or more, or two) areas depending on the structure or function of the display 1521. For example, in the embodiment illustrated in FIG. 15, the display 1521 may be divided into the areas by the folding area 15211 or folding axis A extending in parallel with the y axis, or the display 1521 may be divided into the areas with respect to another folding area (e.g., a folding area parallel with the x axis) or another folding axis (e.g., a folding axis parallel with the x axis).

The first area 15212 and the second area 15213 may be overall symmetrical in shape with respect to the folding area 15211. However, unlike the first area 15212, the second area 15213 may include a notch depending on the presence of the sensor area 15122, but the rest may be symmetrical in shape with the first area 15212. In other words, the first area 15212 and the second area 15213 may include symmetrical portions and asymmetrical portions.

Described below are the operation of the first housing structure 1511 and the second housing structure 1512 and each area of the display 1521 depending on the state (e.g., the unfolded state (flat state) and folded state) of the electronic device 1500.

According to an embodiment, in case that the electronic device 1500 is in the unfolded state (flat state) (e.g., FIG. 15), the first housing structure 1511 and the second housing structure 1512 may be angled at 180 degrees therebetween, facing in the same direction. The surface of the first area 15212 and the surface of the second area 15213 of the display 1521 may be angled at 180 degrees therebetween while facing in the same direction (e.g., forward of the front surface of the electronic device). The folding area 15211 may be coplanar with the first area 15212 and the second area 15213.

According to an embodiment, in case that the electronic device 1500 is in the folded state, the first housing structure 1511 and the second housing structure 1512 may be disposed to face each other. The surface of the first area 15212 and the surface of the second area 15213 of the display 1521 may be angled at a small angle (e.g., ranging from 0 degrees to 10 degrees) therebetween while facing each other. At least a portion of the folding area 15211 may be formed as a curve having a predetermined curvature.

According to an embodiment, in case that the electronic device 1500 is in the intermediate state, the first housing structure 1511 and the second housing structure 1512 may be disposed at a certain angle therebetween. The surface of the first area 15212 of the display 1521 and the surface of the second area 15213 may form an angle which is larger than the angle in the folded state and smaller than the angle in the unfolded state. The folding area 15211 may at least partially have a curved surface with a predetermined curvature and, in this case, the curvature may be smaller than that in the folded state.

According to an embodiment, an electronic device 1500 may include a display unit 1520, a bracket assembly 1530, a circuit board unit 1540, a first housing structure 1511, a second housing structure 1512, a first back cover 1514, and a second back cover 1515. In the disclosure, the display unit 1520 may be referred to as a display module or display assembly.

The display unit 1520 may include a display 1521 and one or more plates or layers 1522 on which the display 1521 is seated. According to an embodiment, the plate 1522 may be disposed between the display panel 1521 and the bracket assembly 1530. The display 1521 may be disposed on at least a portion of one surface (e.g., an upper surface of FIG. 16) of the plate 1522. The plate 1522 may be formed in a shape corresponding to the display 1521. For example, a portion of the plate 1522 may be formed in a shape corresponding to the notch 15214 of the display 1521.

The bracket assembly 1530 may include a first bracket 1531, a second bracket 1532, a hinge structure (not shown) disposed between the first bracket 1531 and the second bracket 1532, a hinge cover 1513 covering the hinge structure in case that the hinge structure is viewed from the outside, and a wiring member 1533 (e.g., a flexible printed circuit board (FPC)) crossing the first bracket 1531 and the second bracket 1532.

In an embodiment, the bracket assembly 1530 may be disposed between the plate 1522 and the circuit board unit 1540. As an example, the first bracket 1531 may be disposed between the first area 15212 of the display 1521 and a first circuit board 1541. The second bracket 1532 may be disposed between the second area 15213 of the display 1521 and a second circuit board 1542.

According to an embodiment, the wiring member 1533 and the hinge structure may be at least partially disposed inside the bracket assembly 1530. The wiring member 1533 may be disposed in a direction (e.g., the x-axis direction) crossing the first bracket 1531 and the second bracket 1532. The wiring member 1533 may be disposed in a direction (e.g., the x-axis direction) perpendicular to the folding axis (e.g., the folding axis A of FIG. 15 or the y axis) of the folding area 15211 of the electronic device 1500.

As mentioned above, the circuit board unit 1540 may include the first circuit board 1541 disposed on the first bracket 1531 and the second circuit board 1542 disposed on the second bracket 1532. The first circuit board 1541 and the second circuit board 1542 may be disposed inside a space formed by the bracket assembly 1530, the first housing structure 1511, the second housing structure 1512, the first back cover 1514, and the second back cover 1515. Components for implementing various functions of the electronic device 1500 may be mounted on the first circuit board 1541 and the second circuit board 1542.

The first housing structure 1511 and the second housing structure 1512 may be assembled together to be coupled to both sides of the bracket assembly 1530, with the display unit 1520 coupled to the bracket assembly 1530. As described below, the first housing structure 1511 and the second housing structure 1512 may slide from both sides of the bracket assembly 1530 and fit with the bracket assembly 1530.

According to an embodiment, the first housing structure 1511 may include a first rotation supporting surface 15111, and the second housing structure 1512 may include a second rotation supporting surface 15121 corresponding to the first rotation supporting surface 15111. The first rotation supporting surface 15111 and the second rotation supporting surface 15121 may include a curved surface corresponding to a curved surface included in the hinge cover 1513.

According to an embodiment, the first rotation supporting surface 15111 and the second rotation supporting surface 15121, in the unfolded state of the electronic device 1500 (e.g., the electronic device of FIG. 15), may cover the hinge cover 1513, allowing the hinge cover 1513 to be not or minimally exposed to the back surface of the electronic device 1500. The first rotation supporting surface 15111 and the second rotation supporting surface 15121, in the folded state of the electronic device 1500, may rotate along the curved surface included in the hinge cover 1513, allowing the hinge cover 1513 to be maximally exposed to the back surface of the electronic device 1500.

According to an embodiment, the display 1521 may correspond to the display 300, 400 of FIG. 3A or 4. The first area 15212 and second area 15213 of the display 1521 may correspond to the non-deformable portion, and the folding area 15211 of the display 1300 may correspond to the deformable portion.

According to an embodiment, for the display 1521 to be implemented with a stacked structure, it may include an adhesive layer (e.g., the adhesive layer 910 of FIG. 9). The adhesive layer 910 may include the first area 911 of low modulus material and the second and third areas 913, 915 of high modulus material corresponding to the deformable portion and non-deformable portion.

According to an embodiment, the adhesive layer 910 may be implemented as one layer or as multiple layers. For example, in case that the adhesive layer 910 is implemented as multiple layers, the width of the first area 911 included in the adhesive layer 910 may widen corresponding to the lower surface direction of the display 1300 (e.g., the thickness direction proceeding from the protective layer 303 to the display panel 302 in FIG. 9). Due to the increased proportion of high modulus areas at the outermost portion of the display 900, high durability against external impacts may be provided.

According to an embodiment, mixed areas of high modulus material and low modulus material (e.g., the 1-1th mixed area 712-1 or 1-2th mixed area 714-1 of FIG. 8) may be present near the boundary surfaces between the high modulus material and low modulus material included in the adhesive layer 910. Further, the physical properties (e.g., transmittance and/or refractive index) at the boundary surfaces between the first to third areas 911, 913, 915 may gradually change. In this case, the first adhesive layer 910 may correspond to the adhesive layer 710 of FIG. 8. This may minimize visual perception of the boundary surfaces.

An electronic device 101, 200, 1201, 1500 according to an embodiment of the disclosure may include a flexible display 203, 300, 400, 900, 1000, 1100, 1200, 1300, 1521 having a multilayer structure using an adhesive layer 310, 410, 710, 910, 1010, 1020, 1030. The adhesive layer 310, 410, 710, 910, 1010, 1020, 1030 may include a low modulus area 311, 411, 711, 911, 1011, 1021, 1031 corresponding to a variable area A2, 1303, 15211 of the flexible display 203, 300, 400, 900, 1000, 1100, 1200, 1300, 1521 and a high modulus area 313, 315, 413, 415, 713, 715, 913, 915, 1013, 1015, 1023, 1025, 1033, 1035 corresponding to a non-variable area A1, 1301, 1302, 15212, 15213 of the flexible display. A width of the low modulus area 311, 411, 711, 911, 1011, 1021, 1031 may be greater than or equal to a first portion of a circumference formed by a radius of curvature r of the variable area A2, 1303, 15211.

In the electronic device 101, 200, 1201, 1500 according to an embodiment of the disclosure, the width of the low modulus area 311, 411, 711, 911, 1011, 1021, 1031 may be determined based on a shape of the variable area A2, 1303, 15211, or may be determined based on external forces F1, F2 acting in response to deformation of a shape of the flexible display 203, 300, 400, 900, 1000, 1100, 1200, 1300, 1521.

In the electronic device 101, 200, 1201, 1500 according to an embodiment of the disclosure, the first portion may be 1/2 of the circumference.

In the electronic device 101, 200, 1201, 1500 according to an embodiment of the disclosure, the width of the low modulus area 311, 411, 711, 911, 1011, 1021, 1031 may have a first width of a upper surface 3111 facing a upper layer of the multilayer structure and a second width of a lower surface 3112 facing a lower layer of the multilayer structure that are different, and the first width may be relatively narrower than the second width.

In the electronic device 101, 200, 1201, 1500 according to an embodiment of the disclosure, the adhesive layer 410 includes a first adhesive layer 410-1 and a second adhesive layer 410-2 disposed on a rear surface of the first adhesive layer 410-1, and a width of a second low modulus area 411-2 included in the second adhesive layer 410-2 may be wider than a width of a first low modulus area 411-1 included in the first adhesive layer 410-1.

In the electronic device 101, 200, 1201, 1500 according to an embodiment of the disclosure, the width of the second low modulus area 411-2 may be determined based on a thickness of the first adhesive layer 410-1.

In the electronic device 101, 200, 1201, 1500 according to an embodiment of the disclosure, a refractive index of the low modulus area 311, 411, 711, 911, 1011, 1021, 1031 and a refractive index of the high modulus area 313, 315, 413, 415, 713, 715, 913, 915, 1013, 1015, 1023, 1025, 1033, 1035 adjacent to the low modulus area 311, 411, 711, 911, 1011, 1021, 1031 may gradually decrease or increase.

In the electronic device 101, 200, 1201, 1500 according to an embodiment of the disclosure, a thickness of the low modulus area 311, 411, 711, 911, 1011, 1021, 1031 and a thickness of the high modulus area 313, 315, 413, 415, 713, 715, 913, 915, 1013, 1015, 1023, 1025, 1033, 1035 adjacent to the low modulus area 311, 411, 711, 911, 1011, 1021, 1031 may gradually decrease or increase.

The electronic device 101, 200, 1201, 1500 according to an embodiment of the disclosure may include a window member disposed on a front surface of the flexible display 203, 300, 400, 900, 1000, 1100, 1200, 1300, 1521. The window member may include a glass layer 302 or a coating layer 303 with the adhesive layer 310, 410, 710, 910, 1010, 1020, 1030 provided therebetween.

In the electronic device 101, 200, 1201, 1500 according to an embodiment of the disclosure, the coating layer 303 may include a first coating layer 303-1 and a second coating layer 303-2 with the adhesive layer 310, 410, 710, 910, 1010, 1020, 1030 provided therebetween.

In the electronic device 101, 200, 1201, 1500 according to an embodiment of the disclosure, a pen drop impact resistance of the high modulus area 313, 315, 413, 415, 713, 715, 913, 915, 1013, 1015, 1023, 1025, 1033, 1035 may be at least 3cm higher than a pen drop impact resistance of the low modulus area 311, 411, 711, 911, 1011, 1021, 1031.

In the electronic device 101, 200, 1201, 1500 according to an embodiment of the disclosure, the high modulus area 313, 315, 413, 415, 713, 715, 913, 915, 1013, 1015, 1023, 1025, 1033, 1035 may have a storage modulus of 0.2MPa or more.

In the electronic device 101, 200, 1201, 1500 according to an embodiment of the disclosure, the storage modulus of the high modulus area 313, 315, 413, 415, 713, 715, 913, 915, 1013, 1015, 1023, 1025, 1033, 1035 may increase in response to increasing pen drop speed.

In the electronic device 101, 200, 1201, 1500 according to an embodiment of the disclosure, the low modulus area 311, 411, 711, 911, 1011, 1021, 1031 may have a storage modulus of 0.1MPa or less.

In the electronic device 101, 200, 1201, 1500 according to an embodiment of the disclosure, a pen pressure impact resistance of the high modulus area 313, 315, 413, 415, 713, 715, 913, 915, 1013, 1015, 1023, 1025, 1033, 1035 may be at least 0.2kgf higher than a pen pressure impact resistance of the low modulus area 311, 411, 711, 911, 1011, 1021, 1031.

In the electronic device 101, 200, 1201, 1500 according to an embodiment of the disclosure, the high modulus area 313, 315, 413, 415, 713, 715, 913, 915, 1013, 1015, 1023, 1025, 1033, 1035 may have a pen pressure strength of 1.3kgf or more.

In the electronic device 101, 200, 1201, 1500 according to an embodiment of the disclosure, the low modulus area 311, 411, 711, 911, 1011, 1021, 1031 may have a pen pressure strength of 1.1kgf or less.

In the electronic device 101, 200, 1201, 1500 according to an embodiment of the disclosure, either the high modulus area 313, 315, 413, 415, 713, 715, 913, 915, 1013, 1015, 1023, 1025, 1033, 1035 or the low modulus area 311, 411, 711, 911, 1011, 1021, 1031 may include a fluorescent material having reactivity in a specific wavelength range. The specific wavelength range may be 300nm to 400nm.

An electronic device 101, 200 according to an embodiment of the disclosure may include a flexible display 203 having a multilayer structure using an adhesive layer 310, 410, 710, 910, 1010, 1020, 1030. The flexible display 203 may include a variable area A1 sliding by a roller 251 and a non-variable area A2 adjacent to the variable area A1. The adhesive layer 310, 410, 710, 910, 1010, 1020, 1030 may include a low modulus area 311, 411, 711, 911, 1011, 1021, 1031 corresponding to the variable area A1 and a high modulus area 313, 315, 413, 415, 713, 715, 913, 915, 1013, 1015, 1023, 1025, 1033, 1035 corresponding to the non-variable area A2. The high modulus area 313, 315, 413, 415, 713, 715, 913, 915, 1013, 1015, 1023, 1025, 1033, 1035 may be adjacent to one side of the low modulus area 311, 411, 711, 911, 1011, 1021, 1031. A width of the low modulus area 311, 411, 711, 911, 1011, 1021, 1031 may be greater than or equal to 1/2 of a circumference formed by a radius of curvature r of the variable area A2, 1303, 15211.

In the electronic device 101, 200 according to an embodiment of the disclosure, the width of the low modulus area 311, 411, 711, 911, 1011, 1021, 1031 may be determined based on a shape of the variable area A2, or may be determined based on external forces F1, F2 acting in response to sliding of the flexible display 203.

In the electronic device 101, 200 according to an embodiment of the disclosure, the width of the low modulus area 311, 411, 711, 911, 1011, 1021, 1031 may have a first width of a upper surface 3111 facing a upper layer of the multilayer structure and a second width of a lower surface 3112 facing a lower layer of the multilayer structure that are different, and the first width may be relatively narrower than the second width.

In the electronic device 101, 200 according to an embodiment of the disclosure, the adhesive layer 410 includes a first adhesive layer 410-1 and a second adhesive layer 410-2 disposed on a rear surface of the first adhesive layer 410-1, and a width of a second low modulus area 411-2 included in the second adhesive layer 410-2 may be wider than a width of a first low modulus area 411-1 included in the first adhesive layer 410-1.

The electronic device 101, 200 according to an embodiment of the disclosure may have the width of the second low modulus area 411-2 determined based on a thickness of the first adhesive layer 410-1.

An electronic device 101, 1201, 1500 according to an embodiment of the disclosure may include a flexible display 1300, 1521 having a multilayer structure using an adhesive layer 310, 410, 710, 910, 1010, 1020, 1030. The flexible display 1300, 1521 may include a variable area 1303, 15211 folded by a hinge structure 1440, 1530 and non-variable areas 1301, 1302, 15212, 15213 adjacent to two opposite sides of the variable area 1303, 15211. The adhesive layer may include a low modulus area 311, 411, 711, 911, 1011, 1021, 1031 corresponding to the variable area 1303, 15211 and high modulus areas 313, 315, 413, 415, 713, 715, 913, 915, 1013, 1015, 1023, 1025, 1033, 1035 corresponding to the non-variable areas 1301, 1302, 15212, 15213. The high modulus areas 313, 315, 413, 415, 713, 715, 913, 915, 1013, 1015, 1023, 1025, 1033, 1035 may be adjacent to two opposite sides of the low modulus area 311, 411, 711, 911, 1011, 1021, 1031, and a width of the low modulus area 311, 411, 711, 911, 1011, 1021, 1031 may be greater than or equal to 1/2 of a circumference formed by a radius of curvature r of the variable area A2, 1303, 15211.

In the electronic device 101, 1201, 1500 according to an embodiment of the disclosure, the width of the low modulus area 311, 411, 711, 911, 1011, 1021, 1031 may be determined based on a shape of the variable area 1303, 15211, or may be determined based on external forces F1, F2 acting in response to sliding of the flexible display 203.

In the electronic device 101, 1201, 1500 according to an embodiment of the disclosure, the width of the low modulus area 311, 411, 711, 911, 1011, 1021, 1031 may have a first width of a upper surface 3111 facing a upper layer of the multilayer structure and a second width of a lower surface 3112 facing a lower layer of the multilayer structure that are different, and the first width may be relatively narrower than the second width.

In the electronic device 101, 1201, 1500 according to an embodiment of the disclosure, the adhesive layer 410 includes a first adhesive layer 410-1 and a second adhesive layer 410-2 disposed on a rear surface of the first adhesive layer 410-1, and a width of a second low modulus area 411-2 included in the second adhesive layer 410-2 may be wider than a width of a first low modulus area 411-1 included in the first adhesive layer 410-1.

In the electronic device 101, 1201, 1500 according to an embodiment of the disclosure, the width of the second low modulus area 410-1 may be determined based on a thickness of the first adhesive layer 410-1.

The electronic device according to various embodiments of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The storage medium readable by the machine may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store™), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. Some of the plurality of entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101, 200, 1201, 1500) comprising a flexible display (203, 300, 400, 900, 1000, 1100, 1200, 1300, 1521) having a multilayer structure using an adhesive layer (310, 410, 710, 910, 1010, 1020, 1030),

   wherein the adhesive layer (310, 410, 710, 910, 1010, 1020, 1030) includes a low modulus area (311, 411, 711, 911, 1011, 1021, 1031) corresponding to a variable area (A2, 1303, 15211) of the flexible display (203, 300, 400, 900, 1000, 1100, 1200, 1300, 1521) and a high modulus area (313, 315, 413, 415, 713, 715, 913, 915, 1013, 1015, 1023, 1025, 1033, 1035) corresponding to a non-variable area (A1, 1301, 1302, 15212, 15213) of the flexible display (203, 300, 400, 900, 1000, 1100, 1200, 1300, 1521), and
   wherein a width of the low modulus area (311, 411, 711, 911, 1011, 1021, 1031) is greater than or equal to a first portion of a circumference formed by a radius of curvature (r) of the variable area (A2, 1303, 15211).

2. The electronic device (101, 200, 1201, 1500) of claim 1, wherein the width of the low modulus area (311, 411, 711, 911, 1011, 1021, 1031) is determined based on a shape of the variable area (A2, 1303, 15211), or determined based on an external force (F1, F2) acting in response to deformation of a shape of the flexible display (203, 300, 400, 900, 1000, 1100, 1200, 1300, 1521).

3. The electronic device (101, 200, 1201, 1500) of claim 1, wherein the first portion is 1/2 of the circumference.

4. The electronic device (101, 200, 1201, 1500) of claim 1, wherein the width of the low modulus area (311, 411, 711, 911, 1011, 1021, 1031) has a first width of an upper surface (3111) facing an upper layer of the multilayer structure and a second width of a lower surface (3112) facing a lower layer of the multilayer structure that are different, and the first width is relatively narrower than the second width.

5. The electronic device (101, 200, 1201, 1500) of claim 1, wherein the adhesive layer (410) includes a first adhesive layer (410-1) and a second adhesive layer (410-2) disposed on a rear surface of the first adhesive layer (410-1), and a width of a second low modulus area (411-2) included in the second adhesive layer (410-2) is wider than a width of a first low modulus area (411-1) included in the first adhesive layer (410-1).

6. The electronic device (101, 200, 1201, 1500) of claim 5, wherein the width of the second low modulus area (411-2) is determined based on a thickness of the first adhesive layer (410-1).

7. The electronic device (101, 200, 1201, 1500) of claim 1, wherein a refractive index of the low modulus area (311, 411, 711, 911, 1011, 1021, 1031) and a refractive index of the high modulus area (313, 315, 413, 415, 713, 715, 913, 915, 1013, 1015, 1023, 1025, 1033, 1035) adjacent to the low modulus area (311, 411, 711, 911, 1011, 1021, 1031) gradually decrease or increase.

8. The electronic device (101, 200, 1201, 1500) of claim 1, wherein a thickness of the low modulus area (311, 411, 711, 911, 1011, 1021, 1031) and a thickness of the high modulus area (313, 315, 413, 415, 713, 715, 913, 915, 1013, 1015, 1023, 1025, 1033, 1035) adjacent to the low modulus area (311, 411, 711, 911, 1011, 1021, 1031) gradually decrease or increase.

9. The electronic device (101, 200, 1201, 1500) of claim 1, comprising a window member disposed on a front surface of the flexible display (203, 300, 400, 900, 1000, 1100, 1200, 1300, 1521), and
wherein the window member includes a glass layer (302) or a coating layer (303) with the adhesive layer (310, 410, 710, 910, 1010, 1020, 1030) provided therebetween.

10. The electronic device (101, 200, 1201, 1500) of claim 9, wherein the coating layer (303) includes a first coating layer (303-1) and a second coating layer (303-2) with the adhesive layer (310, 410, 710, 910, 1010, 1020, 1030) provided therebetween.

11. The electronic device (101, 200, 1201, 1500) of claim 1, wherein a pen drop impact resistance of the high modulus area (313, 315, 413, 415, 713, 715, 913, 915, 1013, 1015, 1023, 1025, 1033, 1035) is at least 3cm higher than a pen drop impact resistance of the low modulus area (311, 411, 711, 911, 1011, 1021, 1031), and
wherein a pen pressure impact resistance of the high modulus area (313, 315, 413, 415, 713, 715, 913, 915, 1013, 1015, 1023, 1025, 1033, 1035) is at least 0.2kgf higher than a pen pressure impact resistance of the low modulus area (311, 411, 711, 911, 1011, 1021, 1031).

12. The electronic device (101, 200, 1201, 1500) of claim 1, wherein the high modulus area (313, 315, 413, 415, 713, 715, 913, 915, 1013, 1015, 1023, 1025, 1033, 1035) has a storage modulus of 0.2MPa or more, and
wherein the low modulus area (311, 411, 711, 911, 1011, 1021, 1031) has a storage modulus of 0MPa or more and 0.1MPa or less.

13. The electronic device (101, 200, 1201, 1500) of claim 1, wherein the high modulus area (313, 315, 413, 415, 713, 715, 913, 915, 1013, 1015, 1023, 1025, 1033, 1035) has a pen pressure strength of 1.3kgf or more, and
wherein the low modulus area (311, 411, 711, 911, 1011, 1021, 1031) has a pen pressure strength of 0kgf or more and 1.1kgf or less.

14. The electronic device (101, 200, 1201, 1500) of any one of claims 1 to 13, wherein either the high modulus area (313, 315, 413, 415, 713, 715, 913, 915, 1013, 1015, 1023, 1025, 1033, 1035) or the low modulus area (311, 411, 711, 911, 1011, 1021, 1031) includes a fluorescent material having reactivity in a specific wavelength range, and
wherein the specific wavelength range is 300nm to 400nm.

15. An electronic device (101, 200) comprising a flexible display (203) having a multilayer structure using an adhesive layer (310, 410, 710, 910, 1010, 1020, 1030),

wherein the flexible display (203) includes a variable area (A1) sliding by a roller (251) and a non-variable area (A2) adjacent to the variable area (A1),
wherein the adhesive layer (310, 410, 710, 910, 1010, 1020, 1030) includes a low modulus area (311, 411, 711, 911, 1011, 1021, 1031) corresponding to the variable area (A1) and a high modulus area (313, 315, 413, 415, 713, 715, 913, 915, 1013, 1015, 1023, 1025, 1033, 1035) corresponding to the non-variable area (A2),
wherein the high modulus area (313, 315, 413, 415, 713, 715, 913, 915, 1013, 1015, 1023, 1025, 1033, 1035) is adjacent to one side of the low modulus area (311, 411, 711, 911, 1011, 1021, 1031), and
wherein a width of the low modulus area (311, 411, 711, 911, 1011, 1021, 1031) is greater than or equal to 1/2 of a circumference formed by a radius of curvature (r) of the variable area (A2, 1303, 15211).

# FIG.1

ELECTRONIC DEVICE(101)

INPUT MODULE (150)

SOUND OUTPUT MODULE (155)

DISPLAY MODULE (160)

MEMORY(130)

VOLATILE MEMORY(132)

NON-VOLATILE MEMORY(134)

INTERNAL MEMORY(136)

EXTERNAL MEMORY(138)

PROGRAM(140)

APPLICATION(146)

MIDDLEWARE(144)

OS (142)

BATTERY (189)

POWER MANAGEMENT MODULE (188)

PROCESSOR (120)

MAIN PROCESSOR (121)

AUXILIARY PROCESSOR (123)

COMMUNICATION MODULE (190)

WIRELESS COMMUNICATION MODULE(192)

WIRED COMMUNICATION MODULE(194)

SUBSCRIBER IDENTIFICATION MODULE (196)

ANTENNA MODULE (197)

AUDIO MODULE(170)

SENSOR MODULE(176)

HAPTIC MODULE(179)

CAMERA MODULE(180)

INTERFACE (177)

CONNECTING TERMINAL (178)

SECOND NETWORK (199)

ELECTRONIC DEVICE (104)

FIRST NETWORK (198)

ELECTRONIC DEVICE (102)

SERVER (108)

EP 4 714 648 A1

# FIG.2A

# FIG.2B

# FIG.2C

# FIG.3A

# FIG.3B

# *FIG.4*

# *FIG.5*

```
        ┌─────────────┐
        │    START    │
        └──────┬──────┘
               │
               ▼
 ┌─────────────────────────────────┐
 │  INJECT ADHESIVE INTO PARTITIONED│ ～510
 │   AREAS OF INJECTION PORTION     │
 └──────────────┬──────────────────┘
                │
                ▼
 ┌─────────────────────────────────┐
 │ ADJUST SEPARATION DISTANCE BETWEEN│ ～520
 │  UPPER ROLLER AND LOWER ROLLER   │
 └──────────────┬──────────────────┘
                │
                ▼
 ┌─────────────────────────────────┐
 │   DRAW OUT ADHESIVE LAYER WITH   │ ～530
 │   PREDETERMINED TENSILE FORCE    │
 └──────────────┬──────────────────┘
                │
                ▼
 ┌─────────────────────────────────┐
 │       CURE ADHESIVE LAYER        │ ～540
 └──────────────┬──────────────────┘
                │
                ▼
        ┌─────────────┐
        │     END     │
        └─────────────┘
```

# FIG.6

# FIG.7

# FIG.8

# FIG.9

# *FIG.10*

# FIG.11

# FIG.12

# FIG.13

# FIG.14

# FIG.15

# FIG.16

# FIG.17

## INTERNATIONAL SEARCH REPORT

| International application No. |
|---|
| **PCT/KR2024/010359** |

### A. CLASSIFICATION OF SUBJECT MATTER

**B32B 5/14**(2006.01)i; **B32B 7/12**(2006.01)i; **B32B 7/022**(2019.01)i; **B32B 7/04**(2006.01)i; **B32B 17/10**(2006.01)i; **B32B 27/06**(2006.01)i; **C09J 9/00**(2006.01)i; **G06F 1/16**(2006.01)i

According to International Patent Classification (IPC) or to both national classification and IPC

### B. FIELDS SEARCHED

Minimum documentation searched (classification system followed by classification symbols)

B32B 5/14(2006.01); B32B 7/12(2006.01); G02F 1/1335(2006.01); G09F 9/30(2006.01); H01L 27/32(2006.01); H01L 51/00(2006.01); H10K 99/00(2023.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 플렉서블 디스플레이(flexible display), 접착층(adhesive layer), 모듈러스 (modulus), 원주(circumference), 폭(width)

### C. DOCUMENTS CONSIDERED TO BE RELEVANT

| Category* | Citation of document, with indication, where appropriate, of the relevant passages | Relevant to claim No. |
|---|---|---|
| A | KR 10-2096528 B1 (TORAY ADVANCED MATERIALS KOREA INC.) 02 April 2020 (2020-04-02) See claims 1-13; paragraph [0048]; and figure 1. | 1-15 |
| A | KR 10-2017-0093610 A (SAMSUNG ELECTRONICS CO., LTD.) 16 August 2017 (2017-08-16) See claims 1-34. | 1-15 |
| A | KR 10-2547692 B1 (SAMSUNG DISPLAY CO., LTD.) 27 June 2023 (2023-06-27) See claims 1-22. | 1-15 |
| A | CN 111627324 B (SHANGHAI HEHUI OPTOELECTRONIC CO., LTD.) 10 June 2022 (2022-06-10) See claims 1-12. | 1-15 |
| A | US 2022-0045135 A1 (WUHAN CHINA STAR OPTOELECTRONICS SEMICONDUCTOR DISPLAY TECHNOLOGY CO., LTD.) 10 February 2022 (2022-02-10) See claims 1-20. | 1-15 |

☐ Further documents are listed in the continuation of Box C.    ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **25 October 2024** | **27 October 2024** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/010359**

| Patent document cited in search report | | | Publication date (day/month/year) | Patent family member(s) | | | Publication date (day/month/year) |
|---|---|---|---|---|---|---|---|
| KR | 10-2096528 | B1 | 02 April 2020 | KR | 10-2019-0102872 | A | 04 September 2019 |
| KR | 10-2017-0093610 | A | 16 August 2017 | EP | 3404517 | A1 | 21 November 2018 |
| | | | | EP | 3404517 | A4 | 23 January 2019 |
| | | | | EP | 3404517 | B1 | 02 October 2024 |
| | | | | KR | 10-2451081 | B1 | 06 October 2022 |
| | | | | US | 11084250 | B2 | 10 August 2021 |
| | | | | US | 2019-0061318 | A1 | 28 February 2019 |
| | | | | WO | 2017-135651 | A1 | 10 August 2017 |
| KR | 10-2547692 | B1 | 27 June 2023 | CN | 106847086 | A | 13 June 2017 |
| | | | | CN | 106847086 | B | 04 September 2020 |
| | | | | KR | 10-2017-0066764 | A | 15 June 2017 |
| | | | | KR | 10-2022-0099527 | A | 13 July 2022 |
| | | | | KR | 10-2417115 | B1 | 06 July 2022 |
| | | | | US | 10586942 | B2 | 10 March 2020 |
| | | | | US | 11522154 | B2 | 06 December 2022 |
| | | | | US | 2017-0162823 | A1 | 08 June 2017 |
| | | | | US | 2020-0212352 | A1 | 02 July 2020 |
| CN | 111627324 | B | 10 June 2022 | CN | 111627324 | A | 04 September 2020 |
| US | 2022-0045135 | A1 | 10 February 2022 | CN | 111416056 | A | 14 July 2020 |
| | | | | EP | 4131450 | A1 | 08 February 2023 |
| | | | | EP | 4131450 | A4 | 08 May 2024 |
| | | | | WO | 2021-189542 | A1 | 30 September 2021 |

Form PCT/ISA/210 (patent family annex) (July 2022)